(19) **Europäisches Patentamt / European Patent Office / Office européen des brevets**

(11) **EP 4 773 614 A1**

(12) **EUROPEAN PATENT APPLICATION**
published in accordance with Art. 153(4) EPC

(43) Date of publication:
08.07.2026 Bulletin 2026/28

(21) Application number: 24890205.8

(22) Date of filing: 06.08.2024

(51) International Patent Classification (IPC):
$H04N\ 21/2343^{(2011.01)}$    $H04N\ 21/81^{(2011.01)}$
$H04N\ 7/01^{(2006.01)}$    $G06T\ 3/40^{(2024.01)}$

(52) Cooperative Patent Classification (CPC):
G06T 3/40; G06T 3/4007; G06T 3/4023;
G06T 3/4046; G06T 3/4053; H04N 7/01;
H04N 21/2343; H04N 21/81

(86) International application number:
PCT/CN2024/110109

(87) International publication number:
WO 2025/102841 (22.05.2025 Gazette 2025/21)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 14.11.2023 CN 202311510522

(71) Applicant: Tencent Technology (Shenzhen)
Company Limited
Shenzhen, Guangdong 518057 (CN)

(72) Inventor: YE, Hu
Shenzhen, Guangdong 518057 (CN)

(74) Representative: EP&C
P.O. Box 3241
2280 GE Rijswijk (NL)

(54) **IMAGE GENERATION METHOD AND APPARATUS BASED ON VIDEO FRAME INTERPOLATION, AND COMPUTER DEVICE**

(57) The present application relates to an image generation method and apparatus based on video frame interpolation, and a computer device. The method comprises: acquiring two video frame images, and on the basis of the displacement of pixel points in the two video frame images, determining first optical flow information between the two video frame images (202); on the basis of the two video frame images and the first optical flow information, predicting an intermediate frame image between the two video frame images to obtain a predicted intermediate frame image (204); for each of the two video frame images, on the basis of the video frame image and the displacement of pixel points in the predicted intermediate frame image, determining second optical flow information between the video frame image and the predicted intermediate frame image (206); for each first pixel point in the predicted intermediate frame image, acquiring, from the second optical flow information, a position offset corresponding to the first pixel point, and on the basis of the position offset, selecting an image block corresponding to the first pixel point from the video frame image (208); on the basis of an image block corresponding to each first pixel point in the predicted intermediate frame image, updating a pixel value at each first pixel point in the predicted intermediate frame image to obtain an updated intermediate frame image corresponding to the video frame image (210); and fusing the updated intermediate frame images corresponding to the two video frame images respectively to obtain a fused intermediate frame image (212).

**(Cont. next page)**

202

Acquire two video frame images, and determine first optical flow information between the two video frame images according to displacement of pixel points in the two video frame images

204

Predict an intermediate frame image between the two video frame images based on the two video frame images and the first optical flow information to obtain a predicted intermediate frame image

206

Determine, for each of the two video frame images, second optical flow information between the video frame image and the predicted intermediate frame image according to displacement of pixel points in the video frame image and the predicted intermediate frame image

208

Acquire, for each first pixel point in the predicted intermediate frame image, a position offset corresponding to the first pixel point from the second optical flow information, and select an image block corresponding to the first pixel point from the video frame image according to the position offset

210

Update pixel values at first pixel points in the predicted intermediate frame image based on image blocks corresponding to the first pixel points in the predicted intermediate frame image to obtain an updated intermediate frame image corresponding to the video frame image

212

Fuse updated intermediate frame images respectively corresponding to the two video frame images to obtain a fused intermediate frame image for interpolation between the two video frame images

FIG. 2

**Description**

RELATED APPLICATION

This application claims priority to Chinese Patent Application No. 2023115105221 filed on November 14, 2023 and entitled "IMAGE GENERATION METHOD AND APPARATUS BASED ON VIDEO FRAME INTERPOLATION, AND COMPUTER DEVICE", which is incorporated herein by reference in its entirety.

FIELD OF THE TECHNOLOGY

This application relates to the technical field of computers, and in particular, to an image generation method and apparatus based on video frame interpolation, a computer device, a computer-readable storage medium, and a computer program product.

BACKGROUND OF THE DISCLOSURE

With the development of computer technologies, video frame interpolation technology has emerged. Video frame interpolation technology is a technology for generating intermediate frame images between existing video frame images to increase the video frame rate, enable smoother video playback, or support video restoration and editing.

In the conventional technology, video frame interpolation is mainly based on an optical flow method, where optical flow information between preceding and succeeding frame images is adopted to estimate optical flow information between the intermediate frame image and the adjacent frame images, and then the intermediate frame image is further calculated using image warping according to the optical flow information between the intermediate frame image and the adjacent frame images.

However, in the conventional method, the accuracy of optical flow estimation is affected by many factors, such as illumination changes, blocking, and motion blur. This may cause inaccurate estimated optical flow information, thereby leading to poor image quality of the generated intermediate frame image.

SUMMARY

Embodiments of this application provide an image generation method and apparatus based on video frame interpolation, a computer device, a computer-readable storage medium, and a computer program product.

An image generation method based on video frame interpolation is provided, which is performed by a computer device, and includes:

acquiring two video frame images, and determining first optical flow information between the two video frame images according to displacement of pixel points in the two video frame images;

predicting an intermediate frame image between the two video frame images based on the two video frame images and the first optical flow information to obtain a predicted intermediate frame image;

determining, for each of the two video frame images, second optical flow information between the video frame image and the predicted intermediate frame image according to displacement of pixel points in the video frame image and the predicted intermediate frame image;

acquiring, for each first pixel point in the predicted intermediate frame image, a position offset corresponding to the first pixel point from the second optical flow information, and selecting an image block corresponding to the first pixel point from the video frame image according to the position offset;

updating pixel values at first pixel points in the predicted intermediate frame image based on image blocks corresponding to the first pixel points in the predicted intermediate frame image to obtain an updated intermediate frame image corresponding to the video frame image; and

fusing updated intermediate frame images respectively corresponding to the two video frame images to obtain a fused intermediate frame image for interpolation between the two video frame images.

An image generation apparatus based on video frame interpolation is provided, including:

a first optical flow calculation module configured to acquire two video frame images, and determine first optical flow information between the two video frame images according to displacement of pixel points in the two video frame images;

a prediction module configured to predict an intermediate frame image between the two video frame images based on the two video frame images and the first optical flow information to obtain a predicted intermediate frame image;

a second optical flow calculation module configured to determine, for each of the two video frame images, second optical flow information between the video frame image and the predicted intermediate frame image according to displacement of pixel points in the video frame image and the predicted intermediate frame image;

an image block selection module configured to acquire, for each first pixel point in the predicted intermediate frame image, a position offset corresponding to the first pixel point from the second optical flow information, and select an image block corresponding to the first pixel point from the video frame image according to the position offset;

an update module configured to update pixel values at first pixel points in the predicted intermediate frame image based on image blocks corresponding to the first pixel points in the predicted intermediate frame image to obtain an updated intermediate frame image corresponding to the video frame image; and

a fusion module configured to fuse updated intermediate frame images respectively corresponding to the two video frame images to obtain a fused intermediate frame image for interpolation between the two video frame images.

A computer device is provided, including a memory and one or more processors. The memory has computer-readable instructions stored therein, and the computer-readable instructions, when executed by the one or more processors, cause the one or more processors to perform operations of the foregoing image generation method based on video frame interpolation.

One or more non-volatile computer-readable storage media are provided, having computer-readable instructions stored therein, the computer-readable instructions, when executed by one or more processors, causing the one or more processors to perform operations of the foregoing image generation method based on video frame interpolation.

A computer program product or a computer program is provided, including computer-readable instructions. The computer-readable instructions are stored in a computer-readable storage medium, and one or more processors of a computer device read the computer-readable instructions from the computer-readable storage medium and execute the computer-readable instructions to cause the computer device to perform operations of the foregoing image generation method based on video frame interpolation.

Details of one or more embodiments of this application are set forth in the accompanying drawings and descriptions below. Other features, objectives, and advantages of this application become apparent from the specification, the drawings, and the claims.

BRIEF DESCRIPTION OF THE DRAWINGS

To more clearly illustrate the technical solutions in the embodiments of this application or in the related art, the drawings required in the descriptions of the embodiments or the related art will be briefly introduced below. It is clear that the drawings described below are only embodiments of this application, and a person skilled in the art may obtain other drawings according to the disclosed drawings without involving any creative effort.

FIG. 1 is a diagram of an application environment of an image generation method based on video frame interpolation according to an embodiment.

FIG. 2 is a schematic flowchart of an image generation method based on video frame interpolation according to an embodiment.

FIG. 3 is a schematic diagram of optical flow information according to an embodiment.

FIG. 4 is a schematic diagram of a selected image block according to an embodiment.

FIG. 5 is a schematic diagram of a selected image block according to another embodiment.

FIG. 6 is a schematic diagram of a selected image block according to yet another embodiment.

FIG. 7 is a schematic diagram of a first pixel position and a fourth pixel point according to an embodiment.

FIG. 8 is a schematic diagram of a first pixel position and a fourth pixel point according to another embodiment.

FIG. 9 is a schematic diagram of modeling optical flow based on a linear motion model for frame interpolation according to an embodiment.

FIG. 10 is a schematic diagram of predicting an intermediate frame using optical flow based on a non-linear motion model according to an embodiment.

FIG. 11 is a schematic diagram of an image warping operation according to an embodiment.

FIG. 12 is a schematic diagram of a transformer model (a deep learning model) according to an embodiment.

FIG. 13 is a schematic diagram of implicit alignment based on a transformer structure according to an embodiment.

FIG. 14 is a schematic diagram of application of an image generation method based on video frame interpolation according to an embodiment.

FIG. 15 is a structural block diagram of an image generation apparatus based on video frame interpolation according to an embodiment.

FIG. 16 is a diagram of an internal structure of a computer device according to an embodiment.

DESCRIPTION OF EMBODIMENTS

The technical solutions in the embodiments of this application will be clearly and completely described below with reference to the accompanying drawings in the embodiments of this application. It is clear that the described embodiments are merely some rather than all of the embodiments of this application. All other embodiments obtained by a person skilled in the art based on the embodiments of this application without making creative efforts fall within the protection scope of this application.

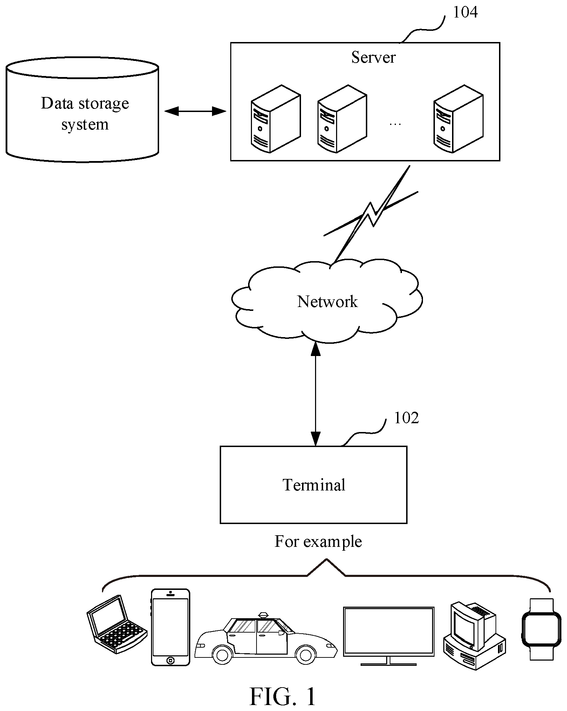

An image generation method based on video frame interpolation provided in the embodiments of this application may be applied to an application environment shown in FIG. 1. A terminal 102 communicates with a server 104 through a network. A data storage system may store data that needs to be processed by the server 104. The data storage system may be integrated on the server 104, or may be placed on the cloud or another server. The terminal 102 acquires two video frame images from the server 104, and determines first optical flow information between the two video frame images according to displacement of pixel points in the two video frame images; predicts an intermediate frame image between the two video frame images based on the two video frame images and the first optical flow information to obtain a predicted intermediate frame image; determines, for each of the two video frame images, second optical flow information between the video frame image and the predicted intermediate frame image according to displacement of pixel points in the video frame image and the predicted intermediate frame image; acquires, for each first pixel point in the predicted intermediate frame image, a position offset corresponding to the first pixel point from the second optical flow information, and selects an image block corresponding to the first pixel point from the video frame image according to the position offset; updates pixel values at first pixel points in the predicted intermediate frame image based on image blocks corresponding to the first pixel points in the predicted intermediate frame image to obtain an updated intermediate frame image corresponding to the video frame image; and fuses updated intermediate frame images respectively corresponding to the two video frame images to obtain a fused intermediate frame image for interpolation between the two video frame images.

The terminal 102 may be, but not limited to, various desktop computers, a notebook computer, a smartphone, a tablet computer, an Internet of Things device, and a portable wearable device. The Internet of Things device may be a smart speaker, a smart television, a smart air conditioner, a smart in-vehicle device, or the like. The portable wearable device may be a smart watch, a smart bracelet, a head-mounted device, or the like. The server 104 may be implemented as an independent server or a server cluster including a plurality of servers.

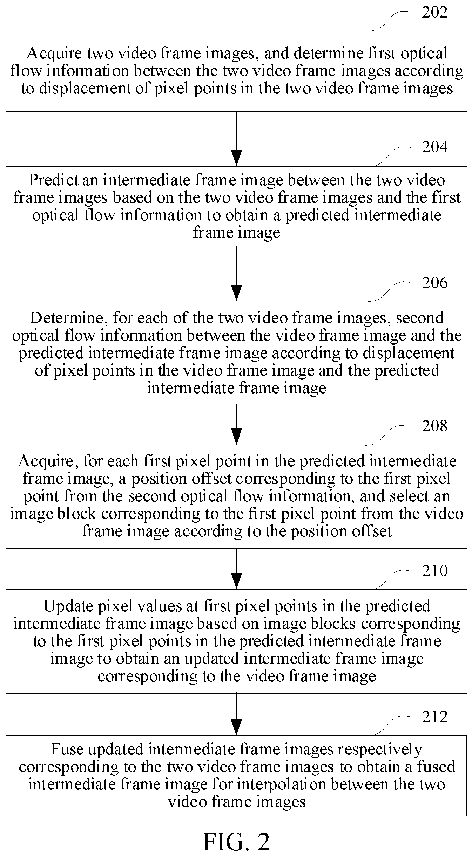

In an embodiment, as shown in FIG. 2, an image generation method based on video frame interpolation is provided. The method may be performed by a terminal or a server independently, or may be jointly performed by the terminal and the server. In this embodiment of this application, an example in which the method is applied to a terminal is used for description. The method includes the following operations.

Operation 202: Acquire two video frame images, and determine first optical flow information between the two video frame images according to displacement of pixel points in the two video frame images.

The video frame image refers to a frame image obtained from a video, that is, an image of a particular frame obtained from the video. The two video frame images refer to two frame images obtained from the video, including a first video frame image and a second video frame image. The first video frame image is a forward frame of the second video frame image. That is, the first video frame image and the second video frame image are two sequential frame images in the video, with the first video frame image occurring temporally before the second video frame image. The first video frame image and the second video frame image may be two consecutive frame images or two non-consecutive frame images.

An optical flow is an instantaneous velocity of a pixel motion of a spatially moving object on an observation imaging plane. An instantaneous rate of change of grayscale/brightness of a particular pixel point in a two-dimensional planar image is also defined as an optical flow. When a time interval is very small (for example, between two consecutive video frame images), the optical flow is equivalent to the displacement of the projection point of the spatial point within the imaging plane. Generally, the optical flow is generated due to a relative motion caused by a movement of a foreground target in a scene, a motion of a camera, or a joint motion of the foreground target and the camera. Generally speaking, when eyes of a person observe a moving object, a scene of the object forms a series of continuously changing images on the retina of the human eye. The series of continuously changing information continuously "flows through" the retina (that is, an image plane), and seems to be a light "stream", and therefore is referred to as an optical flow. The optical flow may alternatively be understood as a flow of pixel intensities in an image. The optical flow expresses a change of an image. Since the optical flow contains information of the motion of a target, the optical flow may be used by an observer to determine a motion status of the target. The first optical flow information is configured for describing motion statuses of pixel points in the two video frame images, that is, an instantaneous velocity of motion of the pixel points in the two video frame images. When the two video frame images are two consecutive frame images, the first optical flow information may be specifically displacement of the pixel points in the two video frame images.

Specifically, the terminal may acquire two video frame images and determine first optical flow information between the two video frame images according to displacement of pixel points in the two video frame images. In a specific application, the terminal may first acquire a video, and then acquire two video frame images from the video. The acquired two video frame images may be two consecutive frame images or two non-consecutive frame images.

In a specific application, the first optical flow information includes forward optical flow information and backward optical flow information. The forward optical flow information refers to optical flow information from a video frame image at an earlier moment to a video frame image at a later moment, and the backward optical flow information refers to optical flow information from the video frame image at the later moment to the video frame image at the earlier moment. For example, assuming that the two video frame images include a first video frame image and a second video frame image, and the first video frame image is a forward frame of the second video frame image, the forward optical flow information refers to optical flow information from the first video frame image to the second video frame image, and the backward optical flow information refers to optical flow information from the second video frame image to the first video frame image.

In a specific application, when the first optical flow information between the two video frame images is determined, if it is determined that the first optical flow information is the forward optical flow information, for each pixel point in the video frame image at the earlier moment, the terminal may determine a position change (that is, displacement) of the pixel point from the video frame image at the earlier moment to the video frame image at the later moment based on a position of the pixel point in the video frame image at the earlier moment and a position of the pixel point in the video frame image at the later moment, to obtain optical flow information of the pixel point, and then obtain the forward optical flow information based on optical flow information of each pixel point.

In a specific application, if it is determined that the first optical flow information is the backward optical flow information, for each pixel point in the video frame image at the later moment, the terminal may determine a position change (that is, displacement) of the pixel point from the video frame image at the later moment to the video frame image at the earlier moment based on the position of the pixel point in the video frame image at the later moment and the position of the pixel point in the video frame image at the earlier moment, to obtain optical flow information of the pixel point, and then obtain the backward optical flow information based on optical flow information of each pixel point.

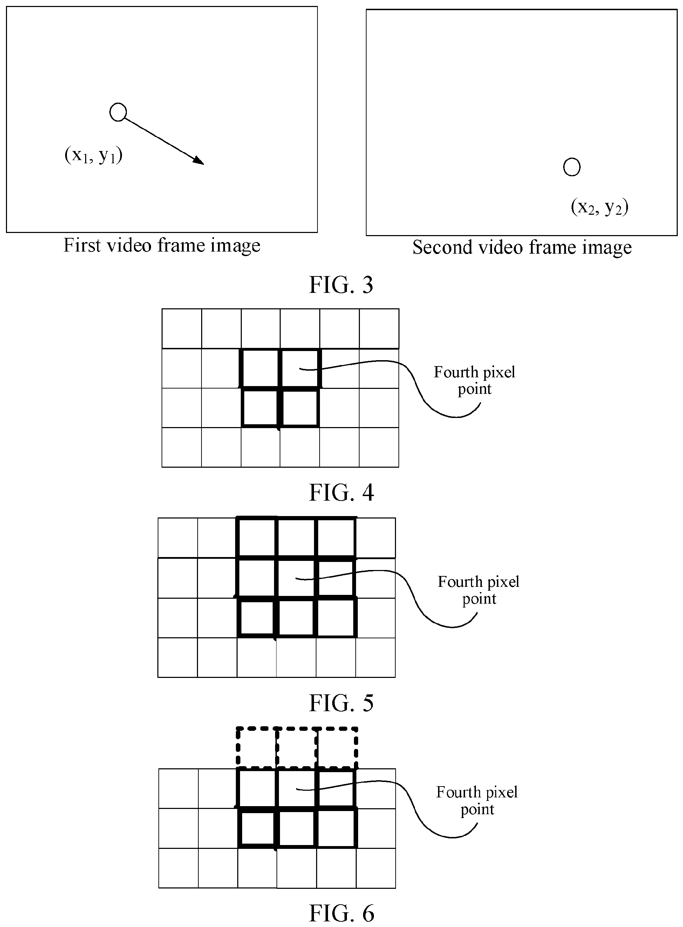

In a specific application, as shown in FIG. 3, it is assumed that two video frame images include a first video frame image and a second video frame image, and the first video frame image is a forward frame of the second video frame image. Using a pixel point A in the first video frame image as an example, a position of the pixel point A in the first video frame image is $(x_1, y_1)$. After the motion, a position of the pixel point A in the second video frame image is $(x_2, y_2)$. Therefore, when the forward optical flow information is calculated, the optical flow information of the pixel point A may be $(u_x, u_y) = (x_2, y_2) - (x_1, y_1)$. The vector $(u_x, u_y)$ is the optical flow information generated by the pixel point A, and contains motion in an x direction and a y direction, that is, displacement of the pixel point A. A value of the optical flow is a sub-pixel floating-point number value. As shown in FIG. 3, an arrow indicates an optical flow vector of the pixel point A between the first video frame image and the second video frame image.

Operation 204: Predict an intermediate frame image between the two video frame images based on the two video frame images and the first optical flow information to obtain a predicted intermediate frame image.

The intermediate frame image refers to an image at an intermediate frame moment interpolated between the two video frame images. The predicted intermediate frame image refers to an intermediate frame image determined by prediction.

Specifically, based on the forward optical flow information and the backward optical flow information in the first optical flow information, and the intermediate frame moment corresponding to the intermediate frame image, the terminal may estimate intermediate frame optical flow information respectively corresponding to the two video frame images through optical flow estimation, and then predict the intermediate frame image between the two video frame images based on the two video frame images and the intermediate frame optical flow information respectively corresponding to the two video frame images to obtain the predicted intermediate frame image.

In a specific application, the intermediate frame moment refers to a moment corresponding to the intermediate frame image in a video. Since the intermediate frame image is a frame image between the two video frame images, the intermediate frame moment is a moment between two moments corresponding to the two video frame images. For example, when the two video frame images include the first video frame image and the second video frame image, and the first video frame image is the forward frame of the second video frame image, the intermediate frame moment refers to a moment between a first moment corresponding to the first video frame image in the video and a second moment corresponding to the second video frame image in the video. For example, when the first moment is one minute and the second moment is one minute and thirty seconds, the intermediate frame moment may be any moment between one minute and one minute and thirty seconds, such as one minute and ten seconds, one minute and fifteen seconds, or one minute and twenty seconds.

In a specific application, the terminal may further predict the intermediate frame image between the two video frame images through a pre-trained intermediate frame image prediction model. The intermediate frame image prediction model may output the predicted intermediate frame image by inputting the two video frame images and the first optical flow information into the pre-trained intermediate frame image prediction model. The pre-trained intermediate frame image prediction model mainly predicts an intermediate frame image between two video frame images through a plurality of times of convolution. A specific model structure may be selected according to an actual application scene. This is not limited herein in this embodiment.

Operation 206: Determine, for each of the two video frame images, second optical flow information between the video frame image and the predicted intermediate frame image according to displacement of pixel points in the video frame image and the predicted intermediate frame image.

The second optical flow information is configured for describing motion statuses of the pixel points in the video frame image and the predicted intermediate frame image, that is, an instantaneous velocity of motion of the pixel points in the video frame image and the predicted intermediate frame image. The second optical flow information may be specifically displacement of the pixel points in the video frame image and the predicted intermediate frame image.

Specifically, for each of the two video frame images, the terminal may determine the second optical flow information between the video frame image and the predicted intermediate frame image according to the displacement of the pixel points in the video frame image and the predicted intermediate frame image. In a specific application, the second optical flow information may be optical flow information from the video frame image to the predicted intermediate frame image, or may be optical flow information from the predicted intermediate frame image to the video frame image.

In a specific application, if the second optical flow information is the optical flow information from the video frame image to the predicted intermediate frame image, for each pixel point in the video frame image, the terminal may determine a position change (that is, displacement) of the pixel point from the video frame image to the predicted intermediate frame image based on a position of the pixel point in the video frame image and a position of the pixel point in the predicted intermediate frame image, to obtain optical flow information of the pixel point, and then obtain the second optical flow information based on optical flow information of each pixel.

In a specific application, if the second optical flow information is the optical flow information from the predicted intermediate frame image to the video frame image, for each first pixel point in the predicted intermediate frame image, the terminal may determine a position change (that is, displacement) of the first pixel point from the predicted intermediate frame image to the video frame image based on a position of the first pixel point in the predicted intermediate frame image and a position of the first pixel point in the video frame image, to obtain optical flow information of the first pixel point, and then obtain the second optical flow information based on optical flow information of each first pixel point.

Operation 208: Acquire, for each first pixel point in the predicted intermediate frame image, a position offset corresponding to the first pixel point from the second optical flow information, and select an image block corresponding to the first pixel point from the video frame image according to the position offset.

The first pixel point refers to a pixel point in the predicted intermediate frame image. The image block refers to a part of an image corresponding to the first pixel point in the video frame image, that is, a part of the video frame image corresponding to the first pixel point. The image block includes at least one pixel point, that is, the image block is formed by at least one pixel point in the video frame image.

Specifically, for each first pixel point in the predicted intermediate frame image, the terminal may acquire the position offset corresponding to the first pixel point from the second optical flow information, and then select the image block corresponding to the first pixel point from the video frame image according to the position offset. The position offset refers to a position offset of the first pixel point between the video frame image and the predicted intermediate frame image, that is, displacement of the first pixel point between the video frame image and the predicted intermediate frame image. The second optical flow information includes a position offset corresponding to each first pixel point in the predicted intermediate frame image, and the terminal may directly acquire the position offset.

In a specific application, the size of the image block may be configured according to an actual application scene. For example, the image block may be specifically an image block formed by N pixel points, and N is a positive integer. Therefore, according to the position offset, the terminal may select N pixel points corresponding to the first pixel point from the video frame image as the image block corresponding to the first pixel point.

Operation 210: Update pixel values at first pixel points in the predicted intermediate frame image based on image blocks corresponding to the first pixel points in the predicted intermediate frame image to obtain an updated intermediate frame image corresponding to the video frame image.

Specifically, for each first pixel point in the predicted intermediate frame image, the terminal may update a pixel value at the first pixel point based on the image block corresponding to the first pixel point to obtain an updated pixel value at the first pixel point, and then obtain the updated intermediate frame image corresponding to the video frame image according to an updated pixel value at each first pixel point in the predicted intermediate frame image. In this embodiment, the updated intermediate frame image corresponding to the video frame image refers to an intermediate frame image obtained by updating pixel values at the first pixel points using image blocks corresponding to the first pixel points in the predicted intermediate frame image.

In a specific application, the image block corresponding to the first pixel point includes a plurality of second pixel points, and the terminal may update the pixel value at the first pixel point based on pixel values at the plurality of second pixel points. In a specific application, the terminal may obtain pixel point features corresponding to the plurality of second pixel points based on the pixel values at the plurality of second pixel points, and then update pixel point features corresponding to the first pixel point using the pixel point features corresponding to the plurality of second pixel points, so that the updated pixel value at the first pixel point may be obtained through updated pixel point features.

In a specific application, a position of the first pixel point in the predicted intermediate frame image is associated with a position of the image block corresponding to the first pixel point in the video frame image. Therefore, when updating the pixel value at the first pixel point, the terminal may acquire position information of the image block corresponding to the first pixel point from the video frame image, and then update the pixel value at the first pixel point based on the image block corresponding to the first pixel point and the position information.

In a specific application, when the image block corresponding to the first pixel point includes a plurality of second pixel points, the position information includes respective pixel point positions of the plurality of second pixel points. Then, the terminal may update the pixel value at the first pixel point based on the pixel values at the plurality of second pixel points and the respective pixel point positions of the plurality of second pixel points.

Operation 212: Fuse updated intermediate frame images respectively corresponding to the two video frame images to obtain a fused intermediate frame image for interpolation between the two video frame images.

Specifically, the terminal fuses the updated intermediate frame images respectively corresponding to the two video frame images to obtain the fused intermediate frame image for interpolation between the two video frame images. The updated intermediate frame images respectively corresponding to the two video frame images are fused so that features of the updated intermediate frame images can be complemented, to obtain a fused intermediate frame image having rich features and higher image quality, thereby improving the image quality of the generated intermediate frame image.

In a specific application, during fusion, the terminal may perform feature extraction on the updated intermediate frame images respectively corresponding to the two video frame images to obtain updated intermediate frame image features respectively corresponding to the two video frame images, and then fuse the updated intermediate frame image features respectively corresponding to the two video frame images to obtain the fused intermediate frame image for interpolation between the two video frame images.

According to the foregoing image generation method based on video frame interpolation, two video frame images are acquired, and the first optical flow information between the two video frame images is determined according to the displacement of the pixel points in the two video frame images so that the intermediate frame image between the two video frame images may be predicted based on the two video frame images and the first optical flow information to obtain the predicted intermediate frame image. For each of the two video frame images, the second optical flow information between the video frame image and the predicted intermediate frame image is determined according to the displacement of the pixel points in the video frame image and the predicted intermediate frame image. For each first pixel point in the predicted intermediate frame image, the position offset corresponding to the first pixel point is acquired from the second optical flow information, and the image block corresponding to the first pixel point is selected from the video frame image according to the position offset. The pixel values at the first pixel points in the predicted intermediate frame image are updated based on the image blocks corresponding to the first pixel points in the predicted intermediate frame image so that morphological features and dynamic features between adjacent video frame images can be learned through implicit image and feature alignment, thereby better modeling dynamic changes and evolution progresses of the adjacent video frame images, and obtaining an updated intermediate frame image corresponding to the video frame image with high image quality. Further, the updated intermediate frame images respectively corresponding to the two video frame images may be fused to obtain the fused intermediate frame image for interpolation between the two video frame images so that the image quality of the generated intermediate frame image can be improved.

In an embodiment, updating the pixel values at the first pixel points in the predicted intermediate frame image based on the image blocks corresponding to the first pixel points in the predicted intermediate frame image to obtain the updated intermediate frame image corresponding to the video frame image includes:

acquiring, for each first pixel point in the predicted intermediate frame image, position information of the image block corresponding to the first pixel point from the video frame image; updating the pixel value at the first pixel point based on the image block corresponding to the first pixel point and the position information to obtain an updated pixel value at the first pixel point; and obtaining the updated intermediate frame image corresponding to the video frame image according to an updated pixel value at each first pixel point in the predicted intermediate frame image.

The position information is configured for describing a position of the image block in the video frame image, and may be obtained through a pixel point position of the second pixel point in the image block in the video frame image. For example, when the image block is a single second pixel point, the position information may be a pixel point position of the single second pixel point in the video frame image. When the image block includes a plurality of second pixel points, the position information may be respective pixel point positions of the plurality of second pixel points.

Specifically, for each first pixel point in the predicted intermediate frame image, the position of the first pixel point in the predicted intermediate frame image is associated with the position of the image block corresponding to the first pixel point in the video frame image. Therefore, when updating the pixel value at the first pixel point, the terminal may acquire the position information of the image block corresponding to the first pixel point from the video frame image, and then update the pixel value at the first pixel point based on the image block corresponding to the first pixel point and the position information to obtain the updated pixel value at the first pixel point. After the updated pixel value at each first pixel point in the predicted intermediate frame image is obtained, the updated intermediate frame image corresponding to the video frame image, that is, the intermediate frame image obtained by updating the pixel value at each first pixel point in the predicted intermediate frame image, may be obtained according to the updated pixel value at each first pixel point in the predicted intermediate frame image.

In a specific application, the terminal may first perform feature extraction based on the image block corresponding to the first pixel point and the position information to obtain image block features corresponding to the image block and generate pixel point features corresponding to the first pixel point, then update the pixel point features corresponding to the first pixel point using the image block features, and update the pixel value at the first pixel point through the updated pixel point features to obtain the updated pixel value at the first pixel point.

Updating the pixel point features corresponding to the first pixel point using the image block features may be understood as performing implicit feature alignment on the image block features and the pixel point features corresponding to the first pixel point, and representing the pixel point features corresponding to the first pixel point through the image block features.

In a specific application, when the image block is a single second pixel point, and the position information may be a pixel point position of the single second pixel point in the video frame image, the terminal may perform feature extraction based on a pixel value at the single second pixel point and the pixel point position of the single second pixel point to obtain the image block features. When the image block includes a plurality of second pixel points, the image block features need to be determined with reference to pixel values at the plurality of second pixel points and respective pixel point positions of the plurality of second pixel points.

In this embodiment, for each first pixel point in the predicted intermediate frame image, the position information of the image block corresponding to the first pixel point is acquired from the video frame image so that the pixel value at the first pixel point can be accurately updated with reference to the image block corresponding to the first pixel point and the position information. Further, the updated intermediate frame image corresponding to the video frame image may be determined according to the updated pixel value at each first pixel point in the predicted intermediate frame image to obtain the updated intermediate frame image with high image quality, so as to generate the fused intermediate frame image with high image quality based on the updated intermediate frame image.

In an embodiment, the image block corresponding to the first pixel point includes a plurality of second pixel points, and the position information includes respective pixel point positions of the plurality of second pixel points. Updating the pixel value at the first pixel point based on the image block corresponding to the first pixel point and the position information to obtain the updated pixel value at the first pixel point includes: performing, for each of the plurality of second pixel points, feature extraction based on a pixel value at the second pixel point and the pixel point position of the second pixel point to obtain pixel point features corresponding to the second pixel point; and updating the pixel value at the first pixel point based on pixel point features respectively corresponding to the plurality of second pixel points to obtain the updated pixel value at the first pixel point.

The pixel point features corresponding to the second pixel point refer to features configured for representing the second pixel point. For example, the pixel point features corresponding to the second pixel point may be specifically feature vectors configured for representing the second pixel point.

Specifically, the image block corresponding to the first pixel point includes a plurality of second pixel points, and the position information includes respective pixel point positions of the plurality of second pixel points. Therefore, when updating the pixel value at the first pixel point based on the image block corresponding to the first pixel point and the position information, for each of the plurality of second pixel points, the terminal may perform feature extraction based on the pixel value at the second pixel point and the pixel point position of the second pixel point to obtain the pixel point features corresponding to the second pixel point and generate pixel point features corresponding to the first pixel point, then update the pixel point features corresponding to the first pixel point based on pixel point features respectively corresponding to the plurality of second pixel points, and update the pixel value at the first pixel point through the updated pixel point features to obtain the updated pixel value at the first pixel point.

In a specific application, the terminal may perform feature extraction on the pixel value at the second pixel point and the pixel point position of the second pixel point through a pre-trained pixel point feature extraction network, and input the pixel value and the pixel point position into the pre-trained pixel point feature extraction network to obtain the pixel point features corresponding to the second pixel point. The pre-trained pixel point feature extraction network may be configured according to an actual application scene. In addition, the terminal may first perform feature extraction on the pixel value at the second pixel point and the pixel point position of the second pixel point, and then fuse the two extracted features to obtain the pixel point features corresponding to the second pixel point.

In a specific application, updating the pixel point features corresponding to the first pixel point based on the pixel point features respectively corresponding to the plurality of second pixel points may alternatively be understood as performing implicit feature alignment on the pixel point features respectively corresponding to the plurality of second pixel points and the pixel point features corresponding to the first pixel point. With reference to the pixel point features corresponding to the first pixel point, the pixel point features respectively corresponding to the plurality of second pixel points are adopted for representation.

In this embodiment, for each of the plurality of second pixel points, feature extraction is performed using the pixel value at the second pixel point and the pixel point position of the second pixel point to obtain the pixel point features that can accurately represent the second pixel point. Further, implicit feature alignment may be performed using the pixel point features respectively corresponding to the plurality of second pixel points to update the pixel value at the first pixel point to obtain the updated pixel value at the first pixel point.

In an embodiment, performing feature extraction based on the pixel value at the second pixel point and the pixel point position of the second pixel point to obtain the pixel point features corresponding to the second pixel point includes: encoding the pixel value at the second pixel point to obtain a pixel value code corresponding to the second pixel point, and encoding the pixel point position of the second pixel point to obtain a position code corresponding to the second pixel point; and fusing the pixel value code and the position code that correspond to the second pixel point to obtain the pixel point features corresponding to the second pixel point.

Specifically, to obtain the pixel point features corresponding to the second pixel point, the terminal may encode the pixel value at the second pixel point to obtain the pixel value code corresponding to the second pixel point, encode the pixel point position of the second pixel point to obtain a position code corresponding to the second pixel point, and finally, fuse the pixel value code and the position code that correspond to the second pixel point to obtain the pixel point features corresponding to the second pixel point.

In a specific application, the terminal may encode the pixel value through a pre-trained first encoding network to obtain the pixel value code, and encode the pixel point position through a pre-trained second encoding network to obtain the position code. The pre-trained first encoding network and the pre-trained second encoding network may be trained according to an actual application scene. In this embodiment, training of the first encoding network and the second encoding network is not limited herein.

In a specific application, the terminal may fuse the pixel value code and the position code that correspond to the second pixel point by concatenating the pixel value code and the position code that correspond to the second pixel point, to obtain the pixel point features corresponding to the second pixel point. That is, the pixel point features corresponding to the second pixel point may be in a form of pixel value code + position code.

In this embodiment, the pixel value at the second pixel point can be encoded to obtain the pixel value code corresponding to the second pixel point, and the pixel point position of the second pixel point can be encoded to obtain the position code corresponding to the second pixel point. Further, the pixel value code and the position code may be fused to acquire the pixel point features corresponding to the second pixel point.

In an embodiment, updating the pixel value at the first pixel point based on the pixel point features respectively corresponding to the plurality of second pixel points to obtain the updated pixel value at the first pixel point includes: performing feature extraction based on the pixel value at the first pixel point and the position offset corresponding to the first pixel point to obtain pixel point features corresponding to the first pixel point; and performing feature interaction on the pixel point features respectively corresponding to the plurality of second pixel points and the pixel point features corresponding to the first pixel point based on an attention mechanism to obtain the updated pixel value at the first pixel point.

The attention mechanism is a resource allocation solution for allocating a computing resource to a more important task and resolving an information overload problem when the computing capability is limited. In neural network learning, generally, more parameters of a model indicate a stronger expression capability of the model and a larger amount of information stored by the model. However, this may cause information overload. Therefore, by introducing the attention mechanism, information that is more critical to a current task is focused on among a large amount of input information, and attention on other information is reduced, and irrelevant information is even filtered out, so that information overload may be resolved, and task processing efficiency and accuracy may be improved. In this embodiment, information that is in the pixel point features respectively corresponding to the plurality of second pixel points and that is more critical to the pixel point features corresponding to the first pixel point is focused on, to accurately update the pixel value at the first pixel point.

Specifically, when updating the pixel value at the first pixel point, the terminal may first perform feature extraction based on the pixel value at the first pixel point and the position offset corresponding to the first pixel point to obtain the pixel point features corresponding to the first pixel point, and then perform feature interaction on the pixel point features respectively corresponding to the plurality of second pixel points and the pixel point features corresponding to the first pixel point based on the attention mechanism to obtain the updated pixel value at the first pixel point.

In a specific application, the terminal may perform feature extraction on the pixel value at the first pixel point and the position offset corresponding to the first pixel point through a pre-trained pixel point feature extraction network, and input the pixel value and the position offset into the pre-trained pixel point feature extraction network to obtain the pixel point features corresponding to the first pixel point. The pre-trained pixel point feature extraction network may be configured according to an actual application scene. In addition, the terminal may first perform feature extraction on the pixel value at the first pixel point and the position offset corresponding to the first pixel point, and then fuse the two extracted features to obtain the pixel point features corresponding to the first pixel point.

In a specific application, based on the attention mechanism, feature interaction is performed on the pixel point features respectively corresponding to the plurality of second pixel points and the pixel point features corresponding to the first pixel point to obtain the updated pixel point features corresponding to the first pixel point. Further, the updated pixel value at the first pixel point may be obtained through the updated pixel point features.

In a specific application, when the attention mechanism is a multi-head attention mechanism, for each individual attention mechanism of the multi-head attention mechanism, the terminal may perform feature interaction on the pixel point features respectively corresponding to the plurality of second pixel points and the pixel point features corresponding to the first pixel point based on the attention mechanism to obtain pixel point features corresponding to the attention mechanism. Pixel point features corresponding to the multi-head attention mechanism are fused to obtain the updated pixel point features corresponding to the first pixel point.

Implementation of the attention mechanism mainly relies on three vectors: a query vector, a key vector, and a value vector. The three vectors are linear transformation of input data. In this embodiment, the input data includes the pixel point features respectively corresponding to the plurality of second pixel points and the pixel point features corresponding to the first pixel point.

Functions and interaction manners of the query vector, the key vector, and the value vector are as follows. The query vector is configured for representing a current input element and configured for querying other related elements. The key vector is configured for representing all input elements and configured for being queried. The value vector is configured for representing all input elements, and when an element is queried, a value vector corresponding to the element is configured for calculating the output.

In a specific application, based on a transformation matrix of the attention mechanism, linear transformation is performed on the pixel point features respectively corresponding to the plurality of second pixel points to obtain key vectors and value vectors respectively corresponding to the plurality of second pixel points. Meanwhile, based on the transformation matrix of the attention mechanism, linear transformation is performed on the pixel point features corresponding to the first pixel point to obtain a query vector of the first pixel point. Then, the pixel point features corresponding to the first pixel point may be updated through interaction of the query vector, the key vector, and the value vector. The transformation matrix of the attention mechanism includes a query vector transformation matrix, a key vector transformation matrix, and a value vector transformation matrix, corresponding to the query vector, the key vector, and the value vector, respectively.

In this embodiment, feature extraction is performed using the pixel value at the first pixel point and the position offset corresponding to the first pixel point so that the pixel point features corresponding to the first pixel point that may be accurately represented can be obtained. Further, the pixel value at the first pixel point may be updated by performing feature interaction on the pixel point features respectively corresponding to the plurality of second pixel points and the pixel point features corresponding to the first pixel point based on the attention mechanism, to obtain the updated pixel value at the first pixel point.

In an embodiment, performing feature extraction based on the pixel value at the first pixel point and the position offset corresponding to the first pixel point to obtain the pixel point features corresponding to the first pixel point includes: encoding the pixel value at the first pixel point to obtain a pixel value code corresponding to the first pixel point, and encoding the position offset corresponding to the first pixel point to obtain a position code corresponding to the first pixel point; and fusing the pixel value code and the position code that correspond to the first pixel point to obtain the pixel point features corresponding to the first pixel point.

Specifically, to obtain the pixel point features corresponding to the first pixel point, the terminal may encode the pixel value at the first pixel point to obtain the pixel value code corresponding to the first pixel point, encode the position offset corresponding to the first pixel point to obtain the position code corresponding to the first pixel point, and finally, fuse the pixel value code and the position code that correspond to the first pixel point to obtain the pixel point features corresponding to the first pixel point.

In a specific application, the terminal may encode the pixel value through a pre-trained first encoding network to obtain the pixel value code, and encode the position offset through a pre-trained second encoding network to obtain the position code. The pre-trained first encoding network and the pre-trained second encoding network may be trained according to an actual application scene. In this embodiment, training of the first encoding network and the second encoding network is not limited herein.

In a specific application, the terminal may fuse the pixel value code and the position code that correspond to the first pixel point by concatenating the pixel value code and the position code that correspond to the first pixel point, to obtain the pixel point features corresponding to the first pixel point. That is, the pixel point features corresponding to the first pixel point may be in a form of pixel value code + position code.

In this embodiment, the pixel value at the first pixel point can be encoded to obtain the pixel value code corresponding to the first pixel point, and the position offset corresponding to the first pixel point can be encoded to obtain the position code corresponding to the first pixel point. Further, the pixel value code and the position code that correspond to the first pixel point may be fused to acquire the pixel point features corresponding to the first pixel point.

In an embodiment, performing feature interaction on the pixel point features respectively corresponding to the plurality of second pixel points and the pixel point features corresponding to the first pixel point based on the attention mechanism to obtain the updated pixel value at the first pixel point includes: performing linear transformation on the pixel point features respectively corresponding to the plurality of second pixel points based on a transformation matrix of the attention mechanism to obtain key vectors and value vectors respectively corresponding to the plurality of second pixel points, and performing linear transformation on the pixel point features corresponding to the first pixel point to obtain a query vector of the first pixel point; performing attention weight calculation according to the key vectors respectively corresponding to the plurality of second pixel points and the query vector of the first pixel point to obtain attention weights respectively corresponding to the plurality of second pixel points; using the attention weights respectively corresponding to the plurality of second pixel points as weighting coefficients of the value vectors respectively corresponding to the plurality of second pixel points, and weighting the value vectors respectively corresponding to the plurality of second pixel points to obtain updated pixel point features of the first pixel point; and obtaining the updated pixel value at the first pixel point based on the updated pixel point features of the first pixel point.

The transformation matrix of the attention mechanism includes a query vector transformation matrix, a key vector transformation matrix, and a value vector transformation matrix, corresponding to the query vector, the key vector, and the value vector, respectively.

Specifically, the terminal may perform linear transformation on the pixel point features respectively corresponding to the plurality of second pixel points based on the key vector transformation matrix in the transformation matrix of the attention mechanism to obtain the key vectors respectively corresponding to the plurality of second pixel points, and perform linear transformation on the pixel point features respectively corresponding to the plurality of second pixel points based on the value vector transformation matrix in the transformation matrix of the attention mechanism to obtain the value vectors respectively corresponding to the plurality of second pixel points. Meanwhile, the terminal may perform linear transformation on the pixel point features corresponding to the first pixel point based on the query vector transformation matrix in the transformation matrix of the attention mechanism to obtain the query vector of the first pixel point.

Specifically, based on obtaining the query vector, the key vector, and the value vector, the terminal may update the pixel point features corresponding to the first pixel point through interaction of the query vector, the key vector, and the vector, to obtain the updated pixel point features of the first pixel point. Specifically, the terminal may perform attention weight calculation according to the key vectors respectively corresponding to the plurality of second pixel points and the query vector of the first pixel point to obtain the attention weights respectively corresponding to the plurality of second pixel points, and weight the value vectors respectively corresponding to the plurality of second pixel points based on the attention weights respectively corresponding to the plurality of second pixel points to obtain the updated pixel point features of the first pixel point. After obtaining the updated pixel point features of the first pixel point, the terminal may obtain the updated pixel value at the first pixel point through feature mapping.

In a specific application, the terminal may first calculate similarities between the query vector of the first pixel point and the key vectors respectively corresponding to the plurality of second pixel points using a similarity measurement method (such as a dot product or a cosine similarity) to obtain an attention score matrix, and then convert each element in the attention score matrix through a weight function (such as a softmax function) to generate normalized attention weights, that is, the attention weights respectively corresponding to the plurality of second pixel points.

In a specific application, for each of the plurality of second pixel points, the terminal may use the attention weight corresponding to the second pixel point as the weighting coefficient of the value vector corresponding to the second pixel point, and weight the value vectors respectively corresponding to the plurality of second pixel points to obtain the updated pixel point features of the first pixel point.

In a specific application, before performing linear transformation on the pixel point features respectively corresponding to the plurality of second pixel points and the pixel point features corresponding to the first pixel point through the transformation matrix of the attention mechanism, the terminal may perform layer normalization on the pixel point features respectively corresponding to the plurality of second pixel points and the pixel point features corresponding to the first pixel point so that the distribution of the pixel point features respectively corresponding to the plurality of second pixel points and the pixel point features corresponding to the first pixel point is relatively stable, thereby facilitating better feature interaction based on the attention mechanism.

In this embodiment, the key vectors and the value vectors respectively corresponding to the plurality of second pixel points and the query vector of the first pixel point can be determined through linear transformation based on the transformation matrix of the attention mechanism. Attention weight calculation is performed according to the key vectors respectively corresponding to the plurality of second pixel points and the query vector of the first pixel point to obtain the attention weights respectively corresponding to the plurality of second pixel points. Therefore, the value vectors respectively corresponding to the plurality of second pixel points may be weighted based on the attention weights respectively corresponding to the plurality of second pixel points to obtain the updated pixel point features of the first pixel point so that the updated pixel value at the first pixel point may be determined based on the updated pixel point features of the first pixel point.

In an embodiment, fusing the updated intermediate frame images respectively corresponding to the two video frame images to obtain the fused intermediate frame image for interpolation between the two video frame images includes: performing feature extraction on the updated intermediate frame images respectively corresponding to the two video frame images to obtain updated intermediate frame image features respectively corresponding to the two video frame images; fusing the updated intermediate frame image features respectively corresponding to the two video frame images to obtain fused features; and performing feature mapping based on the fused features to obtain the fused intermediate frame image for interpolation between the two video frame images.

Specifically, the terminal may perform feature extraction on the updated intermediate frame images respectively corresponding to the two video frame images to obtain the updated intermediate frame image features respectively corresponding to the two video frame images, then fuse the updated intermediate frame image features respectively corresponding to the two video frame images to obtain fused features, and finally, perform feature mapping based on the fused features to obtain the fused intermediate frame image for interpolation between the two video frame images.

In a specific application, the image fusion process in this embodiment may be performed through a pre-trained image fusion network. The updated intermediate frame images respectively corresponding to the two video frame images are inputted to the pre-trained image fusion network simultaneously so that the image fusion network may output the fused intermediate frame image. The pre-trained image fusion network may be trained according to an actual application scene. The image fusion network includes a feature extraction layer, a feature fusion layer, and a feature mapping layer, which are configured for performing feature extraction, performing feature fusion, and obtaining, based on the fused features, the fused intermediate frame image for interpolation between the two video frame images, respectively.

In this embodiment, the updated intermediate frame images respectively corresponding to the two video frame images are fused so that features of the updated intermediate frame images can be complemented, to obtain a fused intermediate frame image having rich features and higher image quality, thereby improving the image quality of the generated intermediate frame image.

In an embodiment, performing feature mapping based on the fused features to obtain the fused intermediate frame image for interpolation between the two video frame images includes: performing feature mapping on pixel point features of a plurality of pixel points in the fused features to obtain pixel values at third pixel points in the fused intermediate frame image; and obtaining, according to the pixel values at the third pixel points, the fused intermediate frame image for interpolation between the two video frame images.

Specifically, the plurality of pixel points in the fused features actually indicate the third pixel points in the fused intermediate frame image, respectively. Therefore, the terminal may perform feature mapping on the pixel point features of the plurality of pixel points in the fused features to obtain the pixel values at the third pixel points in the fused intermediate frame image, and then obtain, according to the pixel values at the third pixel points, the fused intermediate frame image for interpolation between the two video frame images.

In a specific application, the pixel point features of the plurality of pixel points may be specifically the pixel value codes of the plurality of pixel points. Therefore, a feature mapping manner may be specifically decoding, that is, the terminal may decode the pixel point features of the plurality of pixel points in the fused features to obtain the pixel values at the third pixel points in the fused intermediate frame image.

In this embodiment, since the fused features actually refer to features of the fused intermediate frame image, feature mapping is performed on the pixel point features of the plurality of pixel points in the fused feature to determine the pixel values at the third pixel points in the fused intermediate frame image so that the fused intermediate frame image for interpolation between the two video frame images may be accurately obtained based on the determination of the pixel values at the third pixel points.

In an embodiment, selecting the image block corresponding to the first pixel point from the video frame image according to the position offset includes: determining a first pixel position corresponding to the first pixel point from the video frame image according to the position offset; and selecting the image block corresponding to the first pixel point from the video frame image based on the first pixel position.

The position offset refers to a position offset of the first pixel point between the video frame image and the predicted intermediate frame image, that is, displacement of the first pixel point between the video frame image and the predicted intermediate frame image.

The first pixel position refers to a pixel position of the first pixel point in the video frame image before it undergoes a position offset. That is, for the first pixel point in the predicted intermediate frame image, before the position offset occurs, the first pixel point is to be located in the video frame image.

Specifically, for each first pixel point in the predicted intermediate frame image, the terminal may directly acquire the position offset corresponding to the first pixel point from the second optical flow information, then determine the first pixel position corresponding to the first pixel point from the video frame image according to the position offset, and select the image block corresponding to the first pixel point from the video frame image based on the first pixel position and the size of the image block.

In a specific application, the pixel point position of the first pixel point may be indicated through pixel point coordinates. The first pixel position corresponding to the first pixel point may be positioned from the video frame image according to the pixel point coordinates and the position offset. In a specific application, an example in which the pixel point coordinates are (x, y) and the position offset is (dx, dy) is used, and the first pixel position may be represented as (x+dx, y+dy). If the first pixel position corresponding to the first pixel point cannot be positioned from the video frame image according to the pixel point coordinates and the position offset, the terminal may directly set the image block corresponding to the first pixel point according to the size of the image block. In the set image block, a pixel value at each second pixel point is 0.

In this embodiment, for each first pixel point in the predicted intermediate frame image, the position offset corresponding to the first pixel point is acquired from the second optical flow information so that the first pixel position corresponding to the first pixel point can be determined from the video frame image using the position offset, and the image block corresponding to the first pixel point may be selected from the video frame image based on the first pixel position.

In an embodiment, selecting the image block corresponding to the first pixel point from the video frame image based on the first pixel position includes: determining a fourth pixel point from the video frame image according to the first pixel position; and selecting the image block corresponding to the first pixel point from the video frame image according to the fourth pixel point and a preset size of the image block.

Specifically, based on the determination of the first pixel position, the fourth pixel point may be determined from the video frame image based on the first pixel position, and then the image block corresponding to the first pixel point may be selected from the video frame image based on the size of the image block. The image block includes the fourth pixel point.

In a specific application, the size of the image block may be configured according to an actual application scene. When the image block corresponding to the first pixel point is selected from the video frame image based on the size of the image block, a selection rule may further be configured according to an actual application scene. For example, the selection rule may be specifically that selection is performed leftwards using the fourth pixel point as a starting point, or selection is performed using the fourth pixel point as a central point. For example, an example in which the size of the image block is four pixel points and selection is performed leftwards using the fourth pixel point as the starting point is used. The obtained image block may be shown in FIG. 4 (bold small squares in FIG. 4 indicate selected pixel points). For another example, an example in which the size of the image block is nine pixel points and selection is performed using the fourth pixel point as the central point is used. The obtained image block may be shown in FIG. 5 (bold small squares in FIG. 5 indicate selected pixel points).

In this embodiment, when an image block is selected, if a selection range is located at an edge of the video frame image, complete selection may not be performed. In this case, the terminal may pad pixel points in an edge area of the image that cannot be selected, and pixel values at the padded pixel points are 0. For example, an example in which the size of the image block is nine pixel points and selection is performed using the fourth pixel point as the central point is used. As shown in FIG. 6, when selection is performed using the fourth pixel point as the central point, the selection range is located at the edge of the video frame image, and only six pixel points (which are indicated by bold small squares in FIG. 6) can be selected from the video frame image. In this case, the terminal may pad pixel points (which are indicated by small squares with dashed lines in FIG. 6) in an edge area of the image that cannot be selected, and pixel values at the padded pixel points are 0, so that the size of the image block remains unchanged.

In this embodiment, the fourth pixel point can be accurately determined from the video frame image using the first pixel position, and then the image block may be accurately selected using the fourth pixel point and the size of the image block.

In an embodiment, determining the fourth pixel point from the video frame image according to the first pixel position includes: using a pixel point closest to the first pixel position in the video frame image as the fourth pixel point when pixel coordinates at the first pixel position are coordinates in a form of floating-point numbers.

In an embodiment, determining the fourth pixel point from the video frame image according to the first pixel position includes: using a pixel point at the first pixel position as the fourth pixel point when pixel coordinates at the first pixel position are not coordinates in a form of floating-point numbers.

Specifically, since the position offset may be a floating-point number, according to the pixel point coordinates and the position offset, the pixel coordinates at the positioned first pixel position may also be coordinates in the form of floating-point numbers. When the pixel coordinates at the first pixel position are coordinates in the form of floating-point numbers, the terminal may use the pixel point closest to the first pixel position in the video frame image as the fourth pixel point. If the position offset is not the floating-point number, according to the pixel point coordinates and the position offset, the pixel coordinates at the positioned first pixel position are also not coordinates in the form of floating-point numbers. In this case, the terminal may directly use the pixel point at the first pixel position as the fourth pixel point.

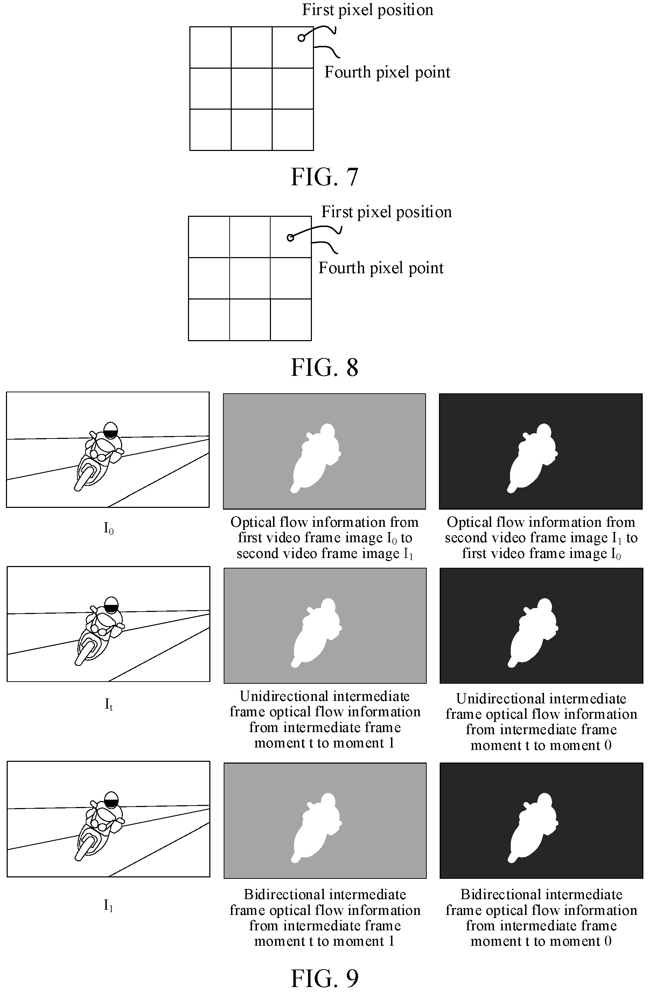

For example, as shown in FIG. 7, in the video frame image, each small square represents a pixel point, and the exact center of the small square represents pixel coordinates of the pixel point. If the positioned first pixel position is not the exact center of the small square, the pixel coordinates at the first pixel position are coordinates in the form of floating-point numbers, and the terminal may use the pixel point closest to the first pixel position as the fourth pixel point. For further example, as shown in FIG. 8, if the positioned first pixel position is the exact center of the small square, the pixel coordinates at the first pixel position are not coordinates in the form of floating-point numbers, and the terminal may use the pixel point at the first pixel position as the fourth pixel point.

In this embodiment, the fourth pixel point is determined in different manners using the coordinate form of the pixel coordinates at the first pixel position so that the fourth pixel point can be accurately determined, and then the image block may be accurately selected using the determined fourth pixel point.

In an embodiment, predicting the intermediate frame image between the two video frame images based on the two video frame images and the first optical flow information to obtain the predicted intermediate frame image includes: estimating intermediate frame optical flow information respectively corresponding to the two video frame images based on forward optical flow information and backward optical flow information in the first optical flow information and an intermediate frame moment; and predicting the intermediate frame image between the two video frame images based on the two video frame images and the intermediate frame optical flow information respectively corresponding to the two video frame images to obtain the predicted intermediate frame image.

The intermediate frame moment refers to a moment corresponding to the intermediate frame image in a video. Since the intermediate frame image is a frame image between the two video frame images, the intermediate frame moment is a moment between two moments corresponding to the two video frame images. The intermediate frame optical flow information refers to optical flow information between the intermediate frame image and the video frame image that is determined through optical flow estimation.

The forward optical flow information refers to optical flow information from a video frame image at an earlier moment to a video frame image at a later moment, and the backward optical flow information refers to optical flow information from the video frame image at the later moment to the video frame image at the earlier moment. For example, assuming that the two video frame images include a first video frame image and a second video frame image, and the first video frame image is a forward frame of the second video frame image, the forward optical flow information refers to optical flow information from the first video frame image to the second video frame image, and the backward optical flow information refers to optical flow information from the second video frame image to the first video frame image.

Specifically, the terminal may estimate the intermediate frame optical flow information respectively corresponding to the two video frame images based on the forward optical flow information and the backward optical flow information in the first optical flow information and the intermediate frame moment. Based on obtaining the intermediate frame optical flow information respectively corresponding to the two video frame images, the terminal may predict the intermediate frame image between the two video frame images based on the two video frame images and the intermediate frame optical flow information respectively corresponding to the two video frame images to obtain the predicted intermediate frame image.

In a specific application, it is assumed that the two video frame images are a first video frame image $I_0$ and a second video frame image $I_1$, respectively, the first video frame image $I_0$ is the forward frame of the second video frame image $I_1$, and the intermediate frame moment is $t \in [0,1]$ (assuming that the first video frame image $I_0$ corresponds to

moment 0, and the second video frame image $I_1$ corresponds to moment 1). To obtain a predicted intermediate frame image $I_t$, the intermediate frame optical flow information $F_{t\to0}$ and $F_{t\to1}$ needs to be calculated, where $F_{t\to0}$ represents the intermediate frame optical flow information from the intermediate frame moment t to moment 0, and $F_{t\to1}$ represents the intermediate frame optical flow information from the intermediate frame moment t to moment 1. Based on obtaining the intermediate frame optical flow information, the intermediate frame image between the two video frame images may be predicted through reverse image warping, to obtain the predicted intermediate frame image.

In a specific application, motion between frames may be modeled based on a linear motion model. A schematic diagram of modeling optical flow based on the linear motion model for frame interpolation may be shown in FIG. 9. If unidirectional consideration is made, the following formula may be adopted for estimation:

$$F_{t\to1}(p) = (1-t)F_{0\to1}(p) \ \text{ or } \ F_{t\to1}(p) = -(1-t)F_{1\to0}(p),$$

where (1 - $t$) and $t$ are weight coefficients corresponding to the intermediate frame moment. The closer $t$ to 0, the higher the weight taken in the calculation. $F_{0\to1}(p)$ refers to the forward optical flow information, that is, optical flow information from the first video frame image $I_0$ to the second video frame image $I_1$, $F_{1\to0}(p)$ refers to the backward optical flow information, that is, optical flow information from the second video frame image $I_1$ to the first video frame image $I_0$, and $F_{t\to1}(p)$ refers to the intermediate frame optical flow information corresponding to the second video frame image. $p$ refers to the pixel point position of the pixel point, that is, the pixel point coordinate.

Further, with reference to a bidirectional relationship, a formula for estimating the intermediate frame optical flow information may be further derived as follows:

$$F_{t\to0} = -(1-t)tF_{0\to1} + t^2 F_{1\to0};$$

$$F_{t\to1} = (1-t^2)F_{0\to1} - t(1-t)\,F_{1\to0},$$

where $F_{t\to0}$ is the intermediate frame optical flow information corresponding to the first video frame image, $F_{t\to1}$ is the intermediate frame optical flow information corresponding to the second video frame image, and (1 - $t$) and $t$ are weight coefficients corresponding to the intermediate frame moment. The closer $t$ to 0, the higher the weight taken in the calculation. $F_{0\to1}(p)$ refers to the forward optical flow information, and $F_{1\to0}(p)$ refers to the backward optical flow information.

Finally, the predicted intermediate frame image It may be calculated in the following manner:

$$I_t = (1-t)*g(I_0, F_{t\to1}) + t*g(I_1, F_{t\to1}),$$

where (1 - $t$) and t are weight coefficients corresponding to the intermediate frame moment. The closer $t$ to 0, the higher the weight taken in the calculation. $g(I_0, F_{t\to1})$ represents performing an image warping operation based on the first video frame image $I_0$ and its corresponding intermediate frame optical flow information, and $g(I_1, F_{t\to1})$ represents performing an image warping operation based on the second video frame image $I_1$ and its corresponding intermediate frame optical flow information.

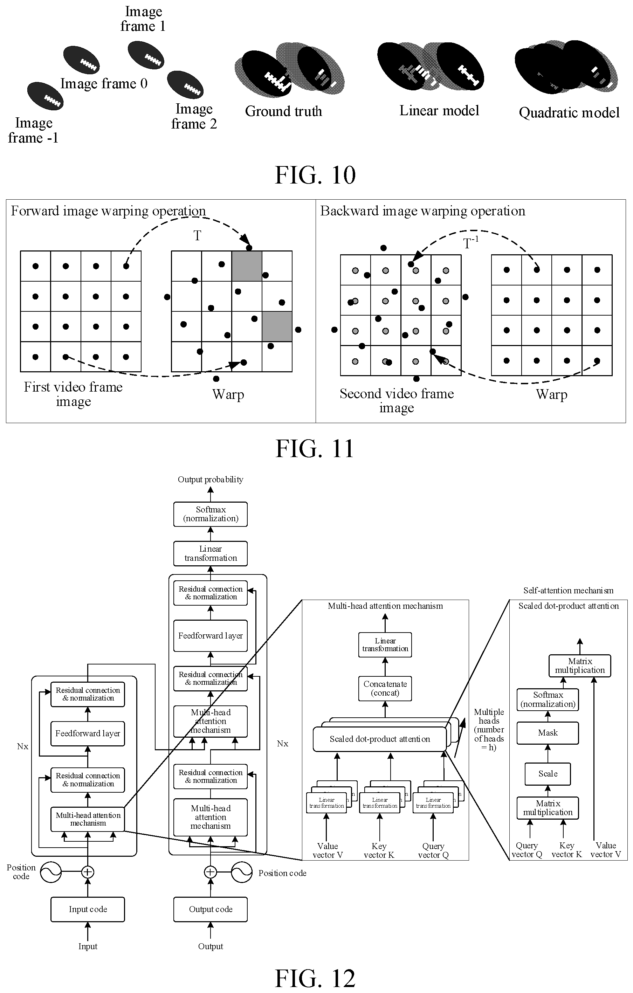

In a specific application, motion between frames may be modeled based on a non-linear motion model. Compared with the foregoing linear motion modeling, in this manner, a second-order non-linear relationship is mainly considered, and a more complex motion is considered. To reflect the motion of an object more truly, assuming that the motion of the object is a uniform acceleration motion, a schematic diagram of predicting an intermediate frame using optical flow based on a non-linear motion model may be shown in FIG. 10. For the uniform acceleration motion modeling, optical flow estimation may also be performed based on the forward optical flow information and the backward optical flow information. An example in which the intermediate frame optical flow information that is, $F_{0\to t}$ corresponding to a frame image 0 in FIG. 10 is calculated is used, and the following quadratic integral formula may be obtained:

$$f_{0\to t} = \int_0^t [v_0 + \int_0^k a_\tau d\tau]dk,$$

where t is a weight coefficient corresponding to the intermediate frame moment. The closer t to 0, the higher the weight taken in the calculation; k is a parameter corresponding to the intermediate frame moment and may be configured according to an actual application scene. For example, k may be a specific numerical value between 0 and 1. $v_0$ is the velocity of the first pixel point in the first video frame image, and $a_\tau$ is the acceleration of the first pixel point in the first video frame image.

After the uniform acceleration motion, $F_{0 \to t}$ may be:

$$F_{0 \to t} = \frac{(F_{0 \to 1} - F_{0 \to (-1)})}{2} * t + \frac{(F_{0 \to 1} + F_{0 \to (-1)})}{2} * t^2,$$

where $F_{0 \to 1}$ is optical flow information from the frame image 0 to the frame image 1 in FIG. 10, $F_{0 \to (-1)}$ is optical flow information from the frame image 0 to the frame image -1 in FIG. 10, and t is a weight coefficient corresponding to the intermediate frame moment. The closer t to 0, the higher the weight taken in the calculation.

The weight coefficient t in the foregoing formula may be obtained through the intermediate frame moment and two moments corresponding to two video frame images. Specifically, assuming that in the two moments corresponding to the two video frame images, an earlier moment is t1, a later moment is t2, and the intermediate frame moment is t3, the weight coefficient t may be obtained through the formula of the weight coefficient t = (t3-t2)/(t1-t2).

In this embodiment, optical flow estimation is performed based on the forward optical flow information and the backward optical flow information in the first optical flow information and the intermediate frame moment to obtain the intermediate frame optical flow information respectively corresponding to the two video frame images so that the intermediate frame image between the two video frame images may be predicted using the two video frame images and the intermediate frame optical flow information respectively corresponding to the two video frame images to obtain the predicted intermediate frame image.

In an embodiment, predicting the intermediate frame image between the two video frame images based on the two video frame images and the intermediate frame optical flow information respectively corresponding to the two video frame images to obtain the predicted intermediate frame image includes: predicting, for each of the two video frame images, the intermediate frame image between the two video frame images based on the video frame image and the intermediate frame optical flow information corresponding to the video frame image to obtain a predicted image corresponding to the video frame image; and fusing predicted images respectively corresponding to the two video frame images to obtain the predicted intermediate frame image.

Specifically, for each of the two video frame images, the terminal may perform an image warping operation on the video frame image and the intermediate frame optical flow information corresponding to the video frame image, predict the intermediate frame image between the two video frame images to obtain the predicted image corresponding to the video frame image, and fuse the predicted images respectively corresponding to the two video frame images to obtain the predicted intermediate frame image.

In a specific application, as shown in FIG. 11, the image warping operation includes a forward image warping operation and a backward image warping operation. The forward image warping operation refers to performing prediction based on a video frame image (the first video frame image shown in FIG. 11) at an earlier moment in two video frame images and its corresponding intermediate frame optical flow information to obtain a predicted image. The backward image warping operation refers to performing prediction based on a video frame image (the second video frame image shown in FIG. 11) at a later moment in the two video frame images and its corresponding intermediate frame optical flow information to obtain a predicted image.

The image warping operation is essentially an image interpolation solution. Such image interpolation is usually bilinear interpolation or nearest neighbor interpolation. The bilinear interpolation or the nearest neighbor interpolation is essentially approximate explicit modeling, that is, motion changes of adjacent frame images are modeled into linear motions for processing. Therefore, such approximate explicit modeling usually can only achieve very general effects. For a complex motion scene or a scene involving illumination changes, such an approximate modeling method fails. Therefore, in this application, after the predicted intermediate frame image is obtained, the fused intermediate frame image with high image quality is generated by further processing the predicted intermediate frame image.

In this embodiment, for each of the two video frame images, the intermediate frame image between the two video frame images can be predicted based on the video frame image and the intermediate frame optical flow information corresponding to the video frame image to obtain the predicted image corresponding to the video frame image. Further, the predicted images respectively corresponding to the two video frame images may be fused to obtain the predicted intermediate frame image.

The inventor considers that the conventional method mainly involves performing video frame interpolation by explicitly calculating the intermediate frame image based on an optical flow method. However, the optical flow-based methods mainly describe relatively significant motion of rigid target images and rely on two strong assumptions. The first assumption is that a pixel value of a target basically remains unchanged between different video frame images, and the second assumption is that adjacent pixels have basically similar motion (that is, the optical flow is basically similar). In addition, the accuracy of optical flow estimation is affected by many factors, such as illumination changes, blocking, and motion blur. This may cause inaccurate estimated optical flow, thereby affecting the quality of video frame interpolation. In addition, the optical flow estimation may have difficulty in processing rapid or complex motions. For example, when the motion of an object between two frames exceeds one pixel, the motion may not be accurately captured through optical flow estimation. Finally, the frame interpolation technology based on optical flow estimation may introduce some visual artifacts such as blur and jitter. This is because the optical flow estimation is an interpolation technology, which may not completely capture all subtle changes between two frame images.

Based on this, this application proposes an image generation method based on video frame interpolation. The image generation method based on video frame interpolation may be understood as a hidden space alignment solution based on a transformer structure. For video frame interpolation scenes under complex and non-linear motion and complex illumination conditions, hidden space alignment can better learn morphological features and dynamic features between adjacent video frame images, thereby better modeling evolution progresses of the adjacent video frame images, and providing a better dynamic material frame interpolation effect.

In an embodiment, the image generation method based on video frame interpolation in this application adopts an implicit modeling method, that is, motion changes in a video frame are directly modeled through a neural network. Based on acquiring the two video frame images, in this application, the intermediate frame image between the two video frame images is first predicted to obtain the predicted intermediate frame image. For each of the two video frame images, the second optical flow information between the video frame image and the predicted intermediate frame image is determined. Then, the updated intermediate frame image corresponding to the video frame image is generated based on the video frame image, the predicted intermediate frame image, and the second optical flow information between the video frame image and the predicted intermediate frame image. The updated intermediate frame images respectively corresponding to the two video frame images are fused to obtain the fused intermediate frame image for interpolation between the two video frame images.

This application does not adopt a conventional bilinear interpolation method or a nearest neighbor modeling method, but implicitly learns such an intermediate frame generation process through a transformer structure. Specifically, in this application, the process of obtaining the updated intermediate frame image corresponding to the video frame image may be described through the following formula: Implicit_warp = function(I_ref, I_target, flow), where Implicit_warp refers to the updated intermediate frame image, function() represents a function of the neural network, that is, generating the updated intermediate frame image, I_ref refers to the video frame image, I_target refers to the predicted intermediate frame image, and flow refers to the second optical flow information between the video frame image and the predicted intermediate frame image.

In a specific application, in this application, the process of generating the updated intermediate frame image corresponding to the video frame image based on the video frame image, the predicted intermediate frame image, and the second optical flow information between the video frame image and the predicted intermediate frame image may be implemented through a pre-trained neural network. The pre-trained neural network may perform the operation of generating the updated intermediate frame image in the foregoing embodiment. The pre-trained neural network may be trained according to an actual application scene. This is not limited herein in this embodiment.

The transformer is a deep learning model. A schematic diagram of a transformer model may be shown in FIG. 12. The transformer mainly includes parts such as a multi-head attention mechanism, residual connection & normalization, and a feedforward layer, and is mainly configured to process sequence data, for example, processing natural language processing tasks and image block sequences. A core of the transformer is a self-attention mechanism. This mechanism can capture long-distance dependency relationships in sequences. In the transformer, the implementation of the self-attention mechanism mainly depends on three vectors: a query vector (Q), a key vector (K), and a value vector (V). The three vectors are all linear transformation of input data. As shown in FIG. 12, in the self-attention mechanism, a dot product of Q and K is first calculated to obtain an attention score matrix, representing the correlation between each element and other elements. Then, these scores are converted into weights through a softmax function. In this way, a sum of weights of each element is 1, representing attention distribution of the element to other elements. Finally, these weights are multiplied by the corresponding V vectors and summed to obtain the output. In this way, each output element is a weighted sum of the input element, and a weight represents a degree of contribution of the input element to the output element.

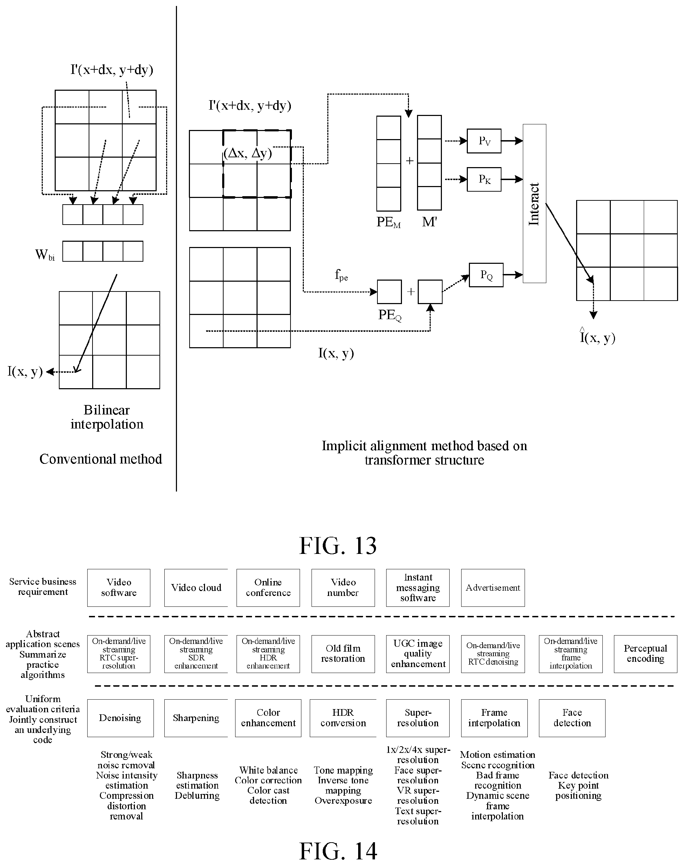

How the transformer structure is configured for performing implicit alignment is described below. As shown in FIG. 13, conventional linear interpolation is shown on the left of FIG. 13. Four pixel points around an interpolation point are processed, and explicit bilinear interpolation is performed on pixel values at the four pixel points. Optical flow information mainly guides searching for the foregoing four pixel points. The right side of FIG. 13 shows an implicit alignment method based on a transformer structure provided in this application. In the solution of this application, the optical flow-like assistance is configured for positioning an approximate alignment area. That is, for each first pixel point in the predicted intermediate frame image, a position offset corresponding to the first pixel point (I (x, y) shown in FIG. 13) is acquired from the second optical flow information. A first pixel position (I'(x+dx, y+dy) shown in FIG. 13) corresponding to the first pixel point is determined from the video frame image according to the position offset. Based on the determination of the first pixel position, an image block corresponding to the first pixel point may be selected from the video frame image based on the first pixel position. Specifically, the terminal may first select an image window block, where the size of the image window block may be two pixel points or three pixel points, and then select the image block according to the image window block. When the size of the image window block is two pixel points, as shown in FIG. 13, the image block includes four pixel points. When the size of the image window block is three pixel points, the image block includes nine pixel points.

Further, when the transformer structure processes an image block (M shown in FIG. 13), information of a position code ($PE_M$) usually further needs to be added for learning position information of the image block in a global image. In this application, for each first pixel point in the predicted intermediate frame image, position information of the image block corresponding to the first pixel point needs to be acquired from the video frame image. Then, the pixel value at the first pixel point is updated based on the image block corresponding to the first pixel point and the position information to obtain an updated pixel value at the first pixel point. The updated intermediate frame image corresponding to the video frame image is obtained according to an updated pixel value at each first pixel point in the predicted intermediate frame image.

In an embodiment, an example in which the image block includes four second pixel points is used. As shown in FIG. 13, for each of the four second pixel points, the terminal may perform feature extraction based on a pixel value at the second pixel point and a pixel point position of the second pixel point to obtain pixel point features corresponding to the second pixel point. Based on pixel point features ($PE_M$+M shown in FIG. 13) respectively corresponding to the plurality of second pixel points, the pixel value at the first pixel point is updated to obtain the updated pixel value ($\hat{I}(x, y)$ as shown in FIG. 13) at the first pixel point.

In an embodiment, the terminal may encode the pixel value at the second pixel point to obtain a pixel value code corresponding to the second pixel point, encode the pixel point position of the second pixel point to obtain a position code corresponding to the second pixel point, and fuse the pixel value code and the position code that correspond to the second pixel point to obtain the pixel point features corresponding to the second pixel point.

In an embodiment, when updating the pixel value at the first pixel point, the terminal may perform feature extraction based on the pixel value at the first pixel point and the position offset (($\Delta x, \Delta y$) as shown in FIG. 13) corresponding to the first pixel point to obtain pixel point features corresponding to the first pixel point. Then, based on a transformation matrix of an attention mechanism, linear transformation is performed on the pixel point features respectively corresponding to the plurality of second pixel points to obtain key vectors ($P_K$ as shown in FIG. 13) and value vectors ($P_V$ as shown in FIG. 13) respectively corresponding to the plurality of second pixel points. Linear transformation is performed on the pixel point features corresponding to the first pixel point to obtain a query vector ($P_Q$) of the first pixel point. The key vector, the value vector, and the query vector are interacted to obtain the updated pixel value at the first pixel point.

A manner of interacting the key vector, the value vector, and the query vector to obtain the updated pixel value at the first pixel point is as follows: performing attention weight calculation according to the key vectors respectively corresponding to the plurality of second pixel points and the query vector of the first pixel point to obtain attention weights respectively corresponding to the plurality of second pixel points; weighting the value vectors respectively corresponding to the plurality of second pixel points based on the attention weights respectively corresponding to the plurality of second pixel points to obtain updated pixel point features of the first pixel point; and obtaining the updated pixel value at the first pixel point based on the updated pixel point features of the first pixel point.

In an embodiment, the terminal may encode the pixel value at the first pixel point to obtain a pixel value code corresponding to the first pixel point, encode the position offset corresponding to the first pixel point to obtain a position code corresponding to the first pixel point, and fuse the pixel value code and the position code that correspond to the first pixel point to obtain the pixel point features corresponding to the first pixel point.

In an embodiment, the image generation method based on video frame interpolation in this application is mainly applied to video super-resolution, and video super-resolution is widely applied to online and offline content playback, live streaming, and on-demand content scenes, old film restoration, real-time communication (RTC) super-resolution, and other fields. It can be targeted toward researchers for further research and exploration in the foregoing fields, or toward consumers integration into a local terminal for video frame interpolation, thereby improving the frame rate of video content and improving video fluency. However, dynamic content occupies a relatively large proportion in a video, and the frame interpolation effect of a conventional frame interpolation method for dynamic content is usually poor. Therefore, the image generation method based on video frame interpolation provided in this application can effectively improve the application effect in the field of frame interpolation for a dynamic scene.

In an embodiment, as shown in FIG. 14, the image generation method based on video frame interpolation provided in this application may be applied to dynamic scene frame interpolation. The dynamic scene frame interpolation is used as an underlying technology and can construct an underlying code together with video super-resolution and other underlying technologies (which further include denoising, sharpening, face detection, and the like as shown in FIG. 14). Then, various application scenes may be abstracted, and practice algorithms such as on-demand/live streaming RTC super-resolution, on-demand/live streaming standard dynamic range (SDR) enhancement, on-demand/live streaming high dynamic range (HDR) imaging enhancement, and user generated content (UGC) image quality enhancement may be summarized, which are applied to various business requirements (including video software, a video cloud, an online conference, a video number, instant messaging software, an advertisement, and the like as shown in FIG. 14).

Although various operations in the flowcharts involved in the foregoing embodiments are shown sequentially as indicated by the arrows, these operations are not necessarily performed in the order indicated by the arrows. These operations are performed in no strict order unless explicitly stated herein, and these operations may be performed in other orders. Moreover, at least some of the operations in the flowcharts involved in the foregoing embodiments may include a plurality of operations or a plurality of stages. These operations or stages are not necessarily performed at the same time, but may be performed at different times. These operations or stages are not necessarily performed in sequence, but may be performed in turn or in alternation with other operations or at least some of the operations or stages in other operations.

Based on the same inventive concept, embodiments of this application further provide an image generation apparatus based on video frame interpolation configured to implement the foregoing image generation method based on video frame interpolation. Implementation solutions provided by the apparatus for resolving problems are similar to the implementation solutions described in the foregoing method. Therefore, specific limitations in one or more embodiments of the image generation apparatus based on video frame interpolation provided below may refer to the limitations on the image generation method based on video frame interpolation in the foregoing descriptions. Details are not described herein again.

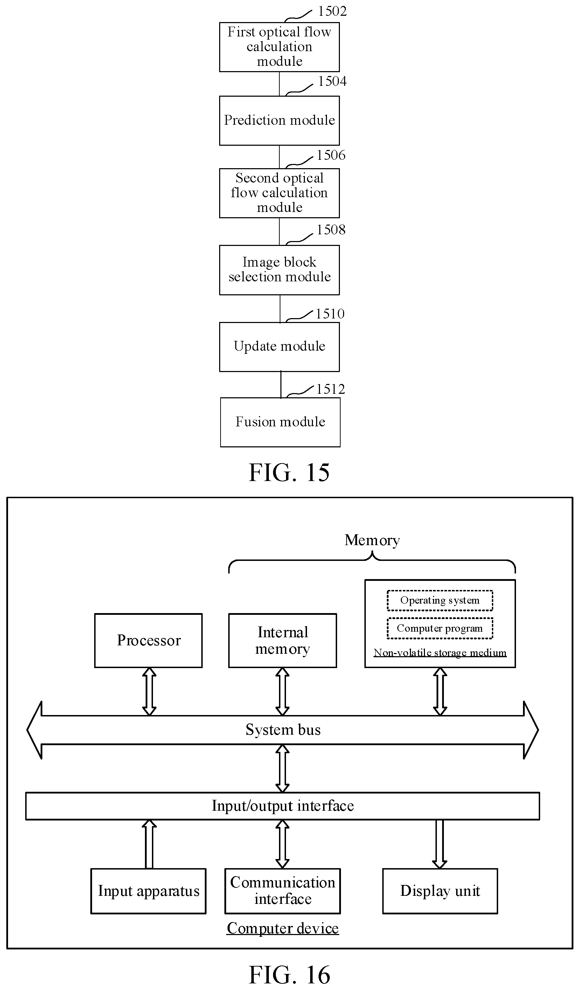

In an embodiment, as shown in FIG. 15, an image generation apparatus based on video frame interpolation is provided, including a first optical flow calculation module 1502, a prediction module 1504, a second optical flow calculation module 1506, an image block selection module 1508, an update module 1510, and a fusion module 1512.

The first optical flow calculation module 1502 is configured to acquire two video frame images, and determine first optical flow information between the two video frame images according to displacement of pixel points in the two video frame images.

The prediction module 1504 is configured to predict an intermediate frame image between the two video frame images based on the two video frame images and the first optical flow information to obtain a predicted intermediate frame image.

The second optical flow calculation module 1506 is configured to determine, for each of the two video frame images, second optical flow information between the video frame image and the predicted intermediate frame image according to displacement of pixel points in the video frame image and the predicted intermediate frame image.

The image block selection module 1508 is configured to acquire, for each first pixel point in the predicted intermediate frame image, a position offset corresponding to the first pixel point from the second optical flow information, and select an image block corresponding to the first pixel point from the video frame image according to the position offset.

The update module 1510 is configured to update pixel values at first pixel points in the predicted intermediate frame image based on image blocks corresponding to the first pixel points in the predicted intermediate frame image to obtain an updated intermediate frame image corresponding to the video frame image.

The fusion module 1512 is configured to fuse updated intermediate frame images respectively corresponding to the two video frame images to obtain a fused intermediate frame image for interpolation between the two video frame images.

According to the foregoing image generation apparatus based on video frame interpolation, two video frame images are acquired, and the first optical flow information between the two video frame images is determined according to the displacement of the pixel points in the two video frame images so that the intermediate frame image between the two video frame images may be predicted based on the two video frame images and the first optical flow information to obtain the predicted intermediate frame image. For each of the two video frame images, the second optical flow information between the video frame image and the predicted intermediate frame image is determined according to the displacement of the pixel points in the video frame image and the predicted intermediate frame image. For each first pixel point in the predicted intermediate frame image, the position offset corresponding to the first pixel point is acquired from the second optical flow information, and the image block corresponding to the first pixel point is selected from the video frame image according to the position offset. The pixel values at the first pixel points in the predicted intermediate frame image are updated based on the image blocks corresponding to the first pixel points in the predicted intermediate frame image so that morphological features and dynamic features between adjacent video frame images can be learned through implicit image and feature alignment, thereby better modeling dynamic changes and evolution progresses of the adjacent video frame images, and obtaining an updated intermediate frame image corresponding to the video frame image with high image quality. Further, the updated intermediate frame images respectively corresponding to the two video frame images may be fused to obtain the fused intermediate frame image for interpolation between the two video frame images so that the image quality of the generated intermediate frame image can be improved.

In an embodiment, the update module is further configured to acquire, for each first pixel point in the predicted intermediate frame image, position information of the image block corresponding to the first pixel point from the video frame image; update the pixel value at the first pixel point based on the image block corresponding to the first pixel point and the position information to obtain an updated pixel value at the first pixel point; and obtain the updated intermediate frame image corresponding to the video frame image according to an updated pixel value at each first pixel point in the predicted intermediate frame image.

In an embodiment, the image block corresponding to the first pixel point includes a plurality of second pixel points, and the position information includes respective pixel point positions of the plurality of second pixel points. The update module is further configured to perform, for each of the plurality of second pixel points, feature extraction based on a pixel value at the second pixel point and the pixel point position of the second pixel point to obtain pixel point features corresponding to the second pixel point; and update the pixel value at the first pixel point based on pixel point features respectively corresponding to the plurality of second pixel points to obtain the updated pixel value at the first pixel point.

In an embodiment, the update module is further configured to encode the pixel value at the second pixel point to obtain a pixel value code corresponding to the second pixel point, and encode the pixel point position of the second pixel point to obtain a position code corresponding to the second pixel point; and fuse the pixel value code and the position code that correspond to the second pixel point to obtain the pixel point features corresponding to the second pixel point.

In an embodiment, the update module is further configured to perform feature extraction based on the pixel value at the first pixel point and the position offset corresponding to the first pixel point to obtain pixel point features corresponding to the first pixel point; and perform feature interaction on the pixel point features respectively corresponding to the plurality of second pixel points and the pixel point features corresponding to the first pixel point based on an attention mechanism to obtain the updated pixel value at the first pixel point.

In an embodiment, the update module is further configured to encode the pixel value at the first pixel point to obtain a pixel value code corresponding to the first pixel point, and encode the position offset corresponding to the first pixel point to obtain a position code corresponding to the first pixel point; and fuse the pixel value code and the position code that correspond to the first pixel point to obtain the pixel point features corresponding to the first pixel point.

In an embodiment, the update module is further configured to perform linear transformation on the pixel point features respectively corresponding to the plurality of second pixel points based on a transformation matrix of the attention mechanism to obtain key vectors and value vectors respectively corresponding to the plurality of second pixel points, and perform linear transformation on the pixel point features corresponding to the first pixel point to obtain a query vector of the first pixel point; perform attention weight calculation according to the key vectors respectively corresponding to the plurality of second pixel points and the query vector of the first pixel point to obtain attention weights respectively corresponding to the plurality of second pixel points; use the attention weights respectively corresponding to the plurality of second pixel points as weighting coefficients of the value vectors respectively corresponding to the plurality of second pixel points, and weight the value vectors respectively corresponding to the plurality of second pixel points to obtain updated pixel point features of the first pixel point; and obtain the updated pixel value at the first pixel point based on the updated pixel point features of the first pixel point.

In an embodiment, the fusion module is further configured to perform feature extraction on the updated intermediate frame images respectively corresponding to the two video frame images to obtain updated intermediate frame image features respectively corresponding to the two video frame images; fuse the updated intermediate frame image features respectively corresponding to the two video frame images to obtain fused features; and perform feature mapping based on the fused features to obtain the fused intermediate frame image for interpolation between the two video frame images.

In an embodiment, the fusion module is further configured to perform feature mapping on pixel point features of a plurality of pixel points in the fused features to obtain pixel values at third pixel points in the fused intermediate frame image; and obtain, according to the pixel values at the third pixel points, the fused intermediate frame image for interpolation between the two video frame images.

In an embodiment, the image block selection module is further configured to determine a first pixel position corresponding to the first pixel point from the video frame image according to the position offset; and select the image block corresponding to the first pixel point from the video frame image based on the first pixel position.

In an embodiment, the image block selection module is further configured to determine a fourth pixel point from the video frame image according to the first pixel position; and select the image block corresponding to the first pixel point from the video frame image according to the fourth pixel point and a preset size of the image block.

In an embodiment, the image block selection module is further configured to use a pixel point closest to the first pixel position in the video frame image as the fourth pixel point when pixel coordinates at the first pixel position are coordinates in a form of floating-point numbers.

In an embodiment, the image block selection module is further configured to use a pixel point at the first pixel position as the fourth pixel point when pixel coordinates at the first pixel position are not coordinates in a form of floating-point numbers.

In an embodiment, the prediction module is further configured to estimate intermediate frame optical flow information respectively corresponding to the two video frame images based on forward optical flow information and backward optical flow information in the first optical flow information and an intermediate frame moment; and predict the intermediate frame image between the two video frame images based on the two video frame images and the intermediate frame optical flow information respectively corresponding to the two video frame images to obtain the predicted intermediate frame image.

In an embodiment, the prediction module is further configured to predict, for each of the two video frame images, the intermediate frame image between the two video frame images based on the video frame image and the intermediate frame optical flow information corresponding to the video frame image to obtain a predicted image corresponding to the video frame image; and fuse predicted images respectively corresponding to the two video frame images to obtain the predicted intermediate frame image.

The various modules in the foregoing image generation apparatus based on video frame interpolation may be implemented in whole or in part by software, hardware, and a combination of the two. The foregoing modules may be embedded in the form of hardware or stored separately from a processor in a computer device, or may be stored in the form of software in a memory of the computer device, facilitating the processor to call the foregoing modules to perform the corresponding operations.

In an embodiment, a computer device is provided. The computer device may be a terminal, or may be a server. An example in which the computer device is a terminal is used, and an internal structure of the computer device may be shown in FIG. 16. The computer device includes a processor, a memory, an input/output interface, a communication interface, a display unit, and an input apparatus. The processor, the memory, and the input/output interface are connected through a system bus. The communication interface, the display unit, and the input apparatus are connected to the system bus through the input/output interface. The processor of the computer device is configured to provide calculation and control capabilities. The memory of the computer device includes a non-volatile storage medium and an internal memory. The non-volatile storage medium stores an operating system and a computer program. The internal memory provides an environment for running the operating system and the computer program in the non-volatile storage medium. The input/output interface of the computer device is configured to exchange information between the processor and an external device. The communication interface of the computer device is configured to conduct wired or wireless communication with an external terminal. The wireless communication may be implemented through wireless fidelity (WIFI), a mobile cellular network, near field communication (NFC), or other technologies. The computer program, when executed by the processor, implements the image generation method based on video frame interpolation. The display unit of the computer device is configured to form a visually visible picture, and may be a display screen, a projection apparatus, or a virtual reality imaging apparatus. The display screen may be a liquid crystal display screen or an electronic-ink display screen. The input apparatus of the computer device may be a touch layer covering the display screen, or may be a key, a trackball, or a touchpad provided on a housing of the computer device, or may be an external keyboard, touchpad, mouse, etc.

A person skilled in the art may understand that the structure shown in FIG. 16 is merely a block diagram of a portion of the structure relevant to the solution of this application and does not constitute a limitation on the computer device to which the solution of this application is applied. A specific computer device may include more or fewer components than those shown in the drawings, a combination of some components, or a different arrangement of components.

In an embodiment, a computer device is further provided, including a memory and a processor. The memory has a computer program stored therein, and the processor, when executing the computer program, implements the operations in the foregoing method embodiments.

In an embodiment, a computer-readable storage medium is provided, having a computer program stored therein. The computer program, when executed by a processor, implements the operations in the foregoing method embodiments.

In an embodiment, a computer program product is provided, including a computer program. The computer program, when executed by a processor, implements the operations in the foregoing method embodiments.

A person skilled in the art may understand that all or some of procedures of the method in the foregoing embodiments may be accomplished by instructing the relevant hardware through the computer program. The computer program may be stored in a non-volatile computer-readable storage medium and may include the procedures of the foregoing method embodiments when executed. Any reference to the memory, databases, or other media used in the embodiments provided by this application may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, etc. The volatile memory may include a random access memory (RAM), an external cache memory, or the like. By way of illustration and not limitation, the RAM may be in a variety of forms, such as a static random access memory (SRAM) or a dynamic random access memory (DRAM). The database involved in various embodiments provided in this application may include at least one of a relational database and a non-relational database. The non-relational database may include a blockchain-based distributed database or the like, but is not limited thereto. The processor involved in various embodiments provided in this application may be a general-purpose processor, a central processing unit, a graphics processing unit, a digital signal processor, a programmable logic device, a data processing logic device based on quantum computing, or the like, but is not limited thereto.

Technical features of the foregoing embodiments may be combined in different manners to form other embodiments. To make description concise, not all possible combinations of the technical features in the foregoing embodiments are described. However, as long as no conflict exists, the combinations of these technical features shall be considered as falling within the scope recorded by this specification.

The foregoing embodiments express only several implementations of this application, which are described in a relatively specific and detailed manner, but are not to be construed as a limitation of the patent scope. For a person skilled in the art, several transformations and improvements may be made without departing from the idea of this application. These transformations and improvements belong to the protection scope of this application. Therefore, the protection scope of the patent of this application shall be subject to the appended claims.

**Claims**

1. An image generation method based on video frame interpolation, performed by a computer device, and comprising:

    acquiring two video frame images, and determining first optical flow information between the two video frame images according to a displacement of one or more pixel points between the two video frame images;
    predicting an intermediate frame image between the two video frame images based on the two video frame images and the first optical flow information;
    for each of the two video frame images,

        determining second optical flow information between the video frame image and the predicted intermediate frame image according to a displacement of one or more pixel points between the video frame image and the predicted intermediate frame image;
        for each first pixel point in the predicted intermediate frame image, acquiring a position offset of the first pixel point from the second optical flow information, and selecting an image block corresponding to the first pixel point from the video frame image according to the position offset; and
        updating pixel values of respective first pixel points in the predicted intermediate frame image based on image blocks corresponding to the respective first pixel points in the predicted intermediate frame image to obtain an updated intermediate frame image corresponding to the video frame image; and

    fusing updated intermediate frame images respectively corresponding to the two video frame images to obtain a fused intermediate frame image to be interpolated between the two video frame images.

2. The method according to claim 1, wherein the pixel values of respective first pixel points in the predicted intermediate frame image based on image blocks corresponding to the respective first pixel points in the predicted intermediate frame image to obtain an updated intermediate frame image corresponding to the video frame image comprises:

    for each first pixel point in the predicted intermediate frame image,

        acquiring position information of an image block corresponding to the first pixel point from the video frame image; and
        updating a pixel value at the first pixel point based on the image block corresponding to the first pixel point and the position information to obtain an updated pixel value at the first pixel point; and

    obtaining the updated intermediate frame image corresponding to the video frame image according to an updated pixel value at each first pixel point in the predicted intermediate frame image.

3. The method according to claim 2, wherein the image block corresponding to the first pixel point comprises a plurality of second pixel points, and the position information comprises respective pixel point positions of the plurality of second pixel points; and
    the updating a pixel value at the first pixel point based on the image block corresponding to the first pixel point and the position information to obtain an updated pixel value at the first pixel point comprises:

    performing, for each second pixel point, feature extraction based on a pixel value at the second pixel point and a pixel point position of the second pixel point to obtain a pixel point feature corresponding to the second pixel point; and
    updating the pixel value at the first pixel point based on pixel point features respectively corresponding to the plurality of second pixel points to obtain the updated pixel value at the first pixel point.

4. The method according to claim 3, wherein the performing, for each second pixel point, feature extraction based on a pixel value at the second pixel point and a pixel point position of the second pixel point to obtain a pixel point feature corresponding to the second pixel point comprises:
for each second pixel point,

encoding the pixel value at the second pixel point to obtain a pixel value code corresponding to the second pixel point, and encoding the pixel point position of the second pixel point to obtain a position code corresponding to the second pixel point; and
fusing the pixel value code and the position code that correspond to the second pixel point to obtain the pixel point feature corresponding to the second pixel point.

5. The method according to claim 3, wherein the updating the pixel value at the first pixel point based on pixel point features respectively corresponding to the plurality of second pixel points to obtain the updated pixel value at the first pixel point comprises:

performing feature extraction based on the pixel value at the first pixel point and the position offset corresponding to the first pixel point to obtain a pixel point feature corresponding to the first pixel point; and
performing feature interaction on the pixel point features respectively corresponding to the plurality of second pixel points and the pixel point feature corresponding to the first pixel point based on an attention mechanism to obtain the updated pixel value at the first pixel point.

6. The method according to claim 5, wherein the performing feature extraction based on the pixel value at the first pixel point and the position offset corresponding to the first pixel point to obtain a pixel point feature corresponding to the first pixel point comprises:

encoding the pixel value at the first pixel point to obtain a pixel value code corresponding to the first pixel point, and encoding the position offset corresponding to the first pixel point to obtain a position code corresponding to the first pixel point; and
fusing the pixel value code and the position code that correspond to the first pixel point to obtain the pixel point feature corresponding to the first pixel point.

7. The method according to claim 5, wherein the performing feature interaction on the pixel point features respectively corresponding to the plurality of second pixel points and the pixel point feature corresponding to the first pixel point based on an attention mechanism to obtain the updated pixel value at the first pixel point comprises:

performing linear transformation on the pixel point features respectively corresponding to the plurality of second pixel points based on a transformation matrix of the attention mechanism to obtain key vectors and value vectors respectively corresponding to the plurality of second pixel points, and performing linear transformation on the pixel point feature corresponding to the first pixel point to obtain a query vector of the first pixel point;
performing attention weight calculation according to the key vectors respectively corresponding to the plurality of second pixel points and the query vector of the first pixel point to obtain attention weights respectively corresponding to the plurality of second pixel points;
weighting the value vectors respectively corresponding to the plurality of second pixel points by using the attention weights respectively corresponding to the plurality of second pixel points as respective weighting coefficients of the value vectors respectively corresponding to the plurality of second pixel points, to obtain an updated pixel point feature of the first pixel point; and
obtaining the updated pixel value at the first pixel point based on the updated pixel point feature of the first pixel point.

8. The method according to any one of claims 1 to 7, wherein the fusing updated intermediate frame images respectively corresponding to the two video frame images to obtain a fused intermediate frame image to be interpolated between the two video frame images comprises:

performing feature extraction on the updated intermediate frame images respectively corresponding to the two video frame images to obtain updated intermediate frame image features respectively corresponding to the two video frame images;
fusing the updated intermediate frame image features respectively corresponding to the two video frame images to obtain a fused feature; and
performing feature mapping based on the fused feature to obtain the fused intermediate frame image to be interpolated between the two video frame images.

9. The method according to claim 8, wherein the performing feature mapping based on the fused feature to obtain the fused intermediate frame image to be interpolated between the two video frame images comprises:

    performing feature mapping on respective pixel point features of a plurality of pixel points in the fused feature to obtain pixel values at respective third pixel points in the fused intermediate frame image; and
    obtaining, according to the pixel values at the respective third pixel points, the fused intermediate frame image to be interpolated between the two video frame images.

10. The method according to any one of claims 1 to 9, wherein the selecting an image block corresponding to the first pixel point from the video frame image according to the position offset comprises:

    determining a first pixel position corresponding to the first pixel point from the video frame image according to the position offset; and
    selecting the image block corresponding to the first pixel point from the video frame image based on the first pixel position.

11. The method according to claim 10, wherein the selecting the image block corresponding to the first pixel point from the video frame image based on the first pixel position comprises:

    determining a fourth pixel point from the video frame image according to the first pixel position; and
    selecting the image block corresponding to the first pixel point from the video frame image according to the fourth pixel point and a preset image-block size.

12. The method according to claim 11, wherein the determining a fourth pixel point from the video frame image according to the first pixel position comprises:
    determining a pixel point closest to the first pixel position in the video frame image as the fourth pixel point when pixel coordinates at the first pixel position are coordinates in a form of floating-point numbers.

13. The method according to claim 11, wherein the determining a fourth pixel point from the video frame image according to the first pixel position comprises:
    determining a pixel point at the first pixel position as the fourth pixel point when pixel coordinates at the first pixel position are not coordinates in a form of floating-point numbers.

14. The method according to any one of claims 1 to 13, wherein the predicting an intermediate frame image between the two video frame images based on the two video frame images and the first optical flow information comprises:

    Estimating two pieces of intermediate frame optical flow information respectively corresponding to the two video frame images based on forward optical flow information and backward optical flow information in the first optical flow information and an intermediate frame moment; and
    predicting the intermediate frame image between the two video frame images based on the two video frame images and the two pieces of intermediate frame optical flow information respectively corresponding to the two video frame images.

15. The method according to claim 14, wherein the predicting the intermediate frame image between the two video frame images based on the two video frame images and the two pieces of intermediate frame optical flow information respectively corresponding to the two video frame images comprises:

    predicting, for each of the two video frame images, an image between the two video frame images based on the video frame image and a piece of intermediate frame optical flow information corresponding to the video frame image; and
    fusing predicted images respectively corresponding to the two video frame images to obtain the predicted intermediate frame image.

16. An image generation apparatus based on video frame interpolation, comprising:

    a first optical flow calculation module configured to acquire two video frame images, and determining first optical flow information between the two video frame images according to a displacement of one or more pixel points between the two video frame images;

a prediction module configured to predict an intermediate frame image between the two video frame images based on the two video frame images and the first optical flow information;

a second optical flow calculation module configured to determine, for each of the two video frame images, second optical flow information between the video frame image and the predicted intermediate frame image according to a displacement of one or more pixel points between the video frame image and the predicted intermediate frame image;

an image block selection module configured to, for each of the two video frame images, acquire, for each first pixel point in the predicted intermediate frame image, a position offset of the first pixel point from the second optical flow information, and selecting an image block corresponding to the first pixel point from the video frame image according to the position offset;

an update module configured to, for each of the two video frame images, update pixel values of respective first pixel points in the predicted intermediate frame image based on image blocks corresponding to the respective first pixel points in the predicted intermediate frame image to obtain an updated intermediate frame image corresponding to the video frame image; and

a fusion module configured to fuse updated intermediate frame images respectively corresponding to the two video frame images to obtain a fused intermediate frame image to be interpolated between the two video frame images.

17. The apparatus according to claim 16, wherein the update module is further configured to:

for each first pixel point in the predicted intermediate frame image, acquire position information of an image block corresponding to the first pixel point from the video frame image; and update a pixel value at the first pixel point based on the image block corresponding to the first pixel point and the position information to obtain an updated pixel value at the first pixel point; and obtain the updated intermediate frame image corresponding to the video frame image according to an updated pixel value at each first pixel point in the predicted intermediate frame image.

18. The apparatus according to claim 17, wherein the image block corresponding to the first pixel point comprises a plurality of second pixel points, and the position information comprises respective pixel point positions of the plurality of second pixel points; and the update module is further configured to: perform, for each second pixel point, feature extraction based on a pixel value at the second pixel point and a pixel point position of the second pixel point to obtain a pixel point feature corresponding to the second pixel point; and update the pixel value at the first pixel point based on pixel point features respectively corresponding to the plurality of second pixel points to obtain the updated pixel value at the first pixel point.

19. The apparatus according to claim 18, wherein the update module is further configured to:

for each second pixel point, encode the pixel value at the second pixel point to obtain a pixel value code corresponding to the second pixel point, and encoding the pixel point position of the second pixel point to obtain a position code corresponding to the second pixel point; and fuse the pixel value code and the position code that correspond to the second pixel point to obtain the pixel point feature corresponding to the second pixel point.

20. A computer device, comprising a memory and a processor, the memory having a computer program stored therein, and the processor, when executing the computer program, implementing operations of the method according to any one of claims 1 to 15.

104

Server

Data storage system

Network

102

Terminal

For example

FIG. 1

202

Acquire two video frame images, and determine first optical flow information between the two video frame images according to displacement of pixel points in the two video frame images

204

Predict an intermediate frame image between the two video frame images based on the two video frame images and the first optical flow information to obtain a predicted intermediate frame image

206

Determine, for each of the two video frame images, second optical flow information between the video frame image and the predicted intermediate frame image according to displacement of pixel points in the video frame image and the predicted intermediate frame image

208

Acquire, for each first pixel point in the predicted intermediate frame image, a position offset corresponding to the first pixel point from the second optical flow information, and select an image block corresponding to the first pixel point from the video frame image according to the position offset

210

Update pixel values at first pixel points in the predicted intermediate frame image based on image blocks corresponding to the first pixel points in the predicted intermediate frame image to obtain an updated intermediate frame image corresponding to the video frame image

212

Fuse updated intermediate frame images respectively corresponding to the two video frame images to obtain a fused intermediate frame image for interpolation between the two video frame images

FIG. 2

First video frame image

Second video frame image

$(x_1, y_1)$

$(x_2, y_2)$

FIG. 3

Fourth pixel point

FIG. 4

Fourth pixel point

FIG. 5

Fourth pixel point

FIG. 6

First pixel position

Fourth pixel point

## FIG. 7

First pixel position

Fourth pixel point

## FIG. 8

$I_0$

Optical flow information from first video frame image $I_0$ to second video frame image $I_1$

Optical flow information from second video frame image $I_1$ to first video frame image $I_0$

$I_t$

Unidirectional intermediate frame optical flow information from intermediate frame moment t to moment 1

Unidirectional intermediate frame optical flow information from intermediate frame moment t to moment 0

$I_1$

Bidirectional intermediate frame optical flow information from intermediate frame moment t to moment 1

Bidirectional intermediate frame optical flow information from intermediate frame moment t to moment 0

## FIG. 9

Image
frame 1

Image frame 0

Image
frame -1

Image
frame 2

Ground truth       Linear model       Quadratic model

# FIG. 10

Forward image warping operation

T

First video frame
image                          Warp

Backward image warping operation

T⁻¹

Second video frame
image                          Warp

# FIG. 11

Output probability

Softmax
(normalization)

Linear
transformation

Residual connection
& normalization

Feedforward layer

Residual connection
& normalization

Multi-head
attention
mechanism

Nx

Residual connection
& normalization

Feedforward layer

Nx

Residual connection
& normalization

Multi-head attention
mechanism

Residual connection
& normalization

Multi-head
attention
mechanism

Position
code

Input code

Input

Position code

Output code

Output

Multi-head attention mechanism

Linear
transformation

Concatenate
(concat)

Scaled dot-product attention

Multiple
heads
(number
of heads
= h)

Linear
transformation

Linear
transformation

Linear
transformation

Value
vector V

Key
vector K

Query
vector Q

Self-attention mechanism

Scaled dot-product attention

Matrix
multiplication

Softmax
(normalization)

Mask

Scale

Matrix
multiplication

Query
vector Q

Key
vector K

Value
vector V

# FIG. 12

I'(x+dx, y+dy)

$W_{bi}$

I(x, y)

Bilinear
interpolation

Conventional method

I'(x+dx, y+dy)

$(\Delta x, \Delta y)$

$PE_M$  M'

$P_V$

$P_K$

Interact

$f_{pe}$

$PE_Q$

$P_Q$

I(x, y)

$\hat{I}(x, y)$

Implicit alignment method based on
transformer structure

## FIG. 13

| Service business requirement | Video software | Video cloud | Online conference | Video number | Instant messaging software | Advertisement | | |
|---|---|---|---|---|---|---|---|---|
| Abstract application scenes Summarize practice algorithms | On-demand/live streaming RTC super-resolution | On-demand/live streaming SDR enhancement | On-demand/live streaming HDR enhancement | Old film restoration | UGC image quality enhancement | On-demand/live streaming RTC denoising | On-demand/live streaming frame interpolation | Perceptual encoding |
| Uniform evaluation criteria Jointly construct an underlying code | Denoising | Sharpening | Color enhancement | HDR conversion | Super-resolution | Frame interpolation | Face detection | |
| | Strong/weak noise removal Noise intensity estimation Compression distortion removal | Sharpness estimation Deblurring | White balance Color correction Color cast detection | Tone mapping Inverse tone mapping Overexposure | 1x/2x/4x super-resolution Face super-resolution VR super-resolution Text super-resolution | Motion estimation Scene recognition Bad frame recognition Dynamic scene frame interpolation | Face detection Key point positioning | |

## FIG. 14

1502

First optical flow
calculation
module

1504

Prediction module

1506

Second optical
flow calculation
module

1508

Image block
selection module

1510

Update module

1512

Fusion module

FIG. 15

Memory

Processor

Internal
memory

Operating system

Computer program

Non-volatile storage medium

System bus

Input/output interface

Input apparatus

Communication
interface

Display unit

Computer device

FIG. 16

## INTERNATIONAL SEARCH REPORT

| International application No. |
| --- |
| **PCT/CN2024/110109** |

| A. | CLASSIFICATION OF SUBJECT MATTER |
| --- | --- |

H04N 21/2343(2011.01)i; H04N 21/81(2011.01)i; H04N 7/01(2006.01)i; G06T 3/40(2024.01)i

According to International Patent Classification (IPC) or to both national classification and IPC

| B. | FIELDS SEARCHED |
| --- | --- |

Minimum documentation searched (classification system followed by classification symbols)

IPC: H04N, G06T

Documentation searched other than minimum documentation to the extent that such documents are included in the fields searched

Electronic data base consulted during the international search (name of data base and, where practicable, search terms used)

CNTXT, CNABS, WPABS, WPABSC, ENTXT, ENTXTC, DWPI, CNKI, IEEE: 插帧, 中间帧, 过度帧, 光流, 更新, 修正, 调整, 隐, 对齐, 位移, 偏移, frame, interpolat+, insert+, intermediate, optical, flow, update, correct+, adjust+, implicit, align+, displacement, offset, warp+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117241065 A (TENCENT TECHNOLOGY (SHENZHEN) CO., LTD.) 15 December 2023 (2023-12-15) description, paragraphs [0015]-[0154] | 1-20 |
| A | CN 112104830 A (BEIJING MEGVII TECHNOLOGY CO., LTD.) 18 December 2020 (2020-12-18) description, paragraphs [0067]-[0108] and [0190]-[0241] | 1-20 |
| A | CN 114071223 A (WUHAN TCL GROUP INDUSTRIAL RESEARCH INSTITUTE CO., LTD.) 18 February 2022 (2022-02-18) entire document | 1-20 |
| A | CN 112584076 A (BEIJING BAIDU NETCOM SCIENCE AND TECHNOLOGY CO., LTD.) 30 March 2021 (2021-03-30) entire document | 1-20 |
| A | CN 112584077 A (BEIJING BAIDU NETCOM SCIENCE AND TECHNOLOGY CO., LTD.) 30 March 2021 (2021-03-30) entire document | 1-20 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 October 2024** | **25 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/110109** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2022284552 A1 (LEMON INC.) 08 September 2022 (2022-09-08)<br>entire document | 1-20 |
| A | XU, Kai et al. "An Implicit Alignment for Video Super-Resolution"<br>*arXiv:2305.00163v1 [cs.CV]*, 29 April 2023 (2023-04-29),<br>entire document | 1-20 |

Form PCT/ISA/210 (second sheet) (July 2022)

**INTERNATIONAL SEARCH REPORT**
Information on patent family members

International application No.

**PCT/CN2024/110109**

| Patent document cited in search report | | | Publication date (day/month/year) | Patent family member(s) | | | Publication date (day/month/year) |
|---|---|---|---|---|---|---|---|
| CN | 117241065 | A | 15 December 2023 | HK | 40097770 | A0 | 22 March 2024 |
| CN | 112104830 | A | 18 December 2020 | WO | 2022033048 | A1 | 17 February 2022 |
| CN | 114071223 | A | 18 February 2022 | None | | | |
| CN | 112584076 | A | 30 March 2021 | EP | 3958207 | A2 | 23 February 2022 |
| | | | | US | 2022103782 | A1 | 31 March 2022 |
| CN | 112584077 | A | 30 March 2021 | EP | 3872748 | A2 | 01 September 2021 |
| | | | | US | 2021329195 | A1 | 21 October 2021 |
| US | 2022284552 | A1 | 08 September 2022 | US | 11625814 | B2 | 11 April 2023 |

Form PCT/ISA/210 (patent family annex) (July 2022)

**REFERENCES CITED IN THE DESCRIPTION**

**Patent documents cited in the description**

- CN 2023115105221